# EUROPÄISCHE PATENTSCHRIFT

(11) **EP 1 519 866 B1**
(45) Veröffentlichungstag und Bekanntmachung des Hinweises auf die Patenterteilung: **18.02.2009**
(21) Anmeldenummer: 03740371.4
(22) Anmeldetag: 27.06.2003
(51) Int. Cl.: B60T 17/08

(54) **BEATMUNGSEINRICHTUNG FÜR EINEN BREMSZYLINDER**
BREATHING DEVICE FOR A BRAKE CYLINDER
DISPOSITIF DE VENTILATION D'UN CYLINDRE DE FREINAGE

(30) Priorität: 28.06.2002 DE 10228934
(43) Veröffentlichungstag der Anmeldung: 06.04.2005
(73) Patentinhaber: WABCO GmbH, 30453 Hannover (DE)
(72) Erfinder: BRANDT, Oliver, 31120 Braunschweig (DE); GLOGOWSCHEK, Roland, 30457 Hannover (DE); RICHTER, Andreas, 30900 Wedemark (DE); UNGER, Herbert, 31832 Springe (DE); WEBER, Thorsten, 31515 Wunstorf (DE); RISCHER, Ulrich, 31832 Springe (DE)
(74) Vertreter: Günther, Constantin
(86) Internationale Anmeldenummer: PCT/EP2003/006867
(87) Internationale Veröffentlichungsnummer: WO 2004/002799

(56) Entgegenhaltungen:
- EP-A- 0 020 862
- EP-A- 0 279 930
- DE-A- 2 942 387
- FR-A- 2 545 175
- GB-A- 1 237 641
- US-A- 3 710 692
- US-A- 6 148 711

## Beschreibung

Die Erfindung betrifft eine Beatmungseinrichtung für einen Bremszylinder nach dem Oberbegriff des Patentanspruchs 1.

Aus der GB 1 237 641 die den Oberbegriff des Anspruchs 1 offenbart ist eine innen belüftete Bremsbetätigungsvorrichtung für ein Fahrzeug bekannt, wobei zur Belüftung der Bremsbetätigungsvorrichtung anstatt der bisher üblichen, mit Schmutz, Feuchtigkeit, Salz und dergleichen beladenen Luft aus der Atmosphäre, bereits gereinigte Druckluft verwendet wird, welche über ein Kammersystem bereitgestellt wird.

Ferner ist eine derartige Beatmungseinrichtung aus der DE 29 43 763 C2 bekannt.

Eine Beatmungseinrichtung findet in einem Bremszylinder Anwendung, der einen von einer Feder beaufschlagten Kolben aufweist, welcher den Bremszylinder in eine Druckmittelkammer und eine Federkammer aufteilt. Der Bremszylinder kann als Federspeicherbremszylinder ausgebildet sein, dessen Feder den Kolben in Bremsbetätigungsrichtung beaufschlagt. Zum Lösen der Bremse wird in die Druckmittelkammer Druckmittel eingesteuert. Der Bremszylinder kann jedoch auch so ausgebildet sein, daß der Kolben von der Feder in Bremslöserichtung und durch Einsteuerung von Druckmittel in die Druckmittelkammer gegen die Kraft der Feder in Bremsbetätigungsrichtung beaufschlagt wird.

Wird z.B. ein als Federspeicherbremszylinder ausgebildeter Bremszylinder durch Druckentlastung seiner Druckmittelkammer betätigt, so vergrößert sich infolge der dann eintretenden Entspannung der Feder und Verschiebung des Kolbens die Federkammer. Um zu verhindern, daß bei dieser Vergrößerung der Federkammer in derselben Unterdruck entsteht, der die Kraftabgabe der Feder behindern würde, wird die Federkammer über ein als Beatmungseinrichtung dienendes Ventil mit der Druckmittelkammer des Federspeicherbremszylinders oder mit der Druckmittelkammer eines mit dem Federspeicherbremszylinder verbundenen, als Betriebsbremszylinder dienenden weiteren Bremszylinders verbunden.

Da das der Druckmittelkammer des Federspeicherbremszylinders oder der Druckmittelkammer des Betriebsbremszylinders zugeführte Druckmittel in der vorgeschalteten Druckmittelbeschaffungs- und Aufbereitungsanlage gereinigt und getrocknet ist, wird durch diese Art der Beatmung die Korrosions- und Verschmutzungsgefahr im Bereich der Federkammer und an der Feder entscheidend herabgesetzt.

Die bekannte Beatmungseinrichtung wirkt derart, daß sich bei allen im Einsatz üblichen Füllgeschwindigkeiten der Druckmittelkammer mit Druckmittel in dieser Kammer, trotz der Abströmung durch das zunächst noch offene Ventil, zwischen der Federkammer und der Druckmittelkammer ein Druck aufbaut, der normalerweise ausreicht, den Ventilkörper dieses Ventils gegen die Kraft eines Federelements zu verschieben und dadurch das Ventil zu schließen.

Es ist bei einer solchen Beatmungseinrichtung jedoch nicht ganz auszuschließen, daß beim Befüllen der Druckmittelkammer die durch das Ventil hindurchströmende Druckluft auch in der Federkammer einen Druck aufbaut, welcher die Rückseite des Ventilkörpers beaufschlagt und so das Schließen des Ventils verzögert, wodurch, insbesondere bei einem als Federspeicherbremszylinder ausgebildeten Bremszylinder, das Ansprechverhalten des Bremszylinders negativ beeinflusst werden kann.

Der Erfindung liegt deshalb die Aufgabe zugrunde, eine Beatmungseinrichtung der eingangs erwähnten Art so zu verbessern, daß eine negative Beeinflussung des Ansprechverhaltens der Beatmungseinrichtung weitestgehend vermieden wird.

Diese Aufgabe wird mit der in dem Patentanspruch 1 angegebenen Ausführung der Erfindung gelöst. Weiterbildungen und vorteilhafte Ausgestaltungen der Erfindung sind in den Unteransprüchen angegeben.

Die Erfindung bietet insbesondere den Vorteil, mit einfachen Mitteln ein feinfühliges Ansprechen des zum Verbinden der Federkammer mit der Druckmittelkammer des Bremszylinders dienenden Beatmungsventils zu erreichen. Bei langsamer Einsteuerung von Druckmittel in die Druckmittelkammer kann Druckmittel, welches möglicherweise während des Schließvorganges des Beatmungsventils in die Federkammer gelangt, nicht auf die Rückseite des bewegbaren Ventilkörpers gelangen, da der Ventilkörper mit seiner der Steuerkammer des Beatmungsventils abgewandten Seite in eine zusätzliche Kammer eintaucht und diese wenigstens annähernd druckdicht abschließt.

Dadurch, daß der Ventilkörper bei einer Bewegung in Schließrichtung des Beatmungsventils die in der zusätzlichen Kammer befindliche Luft geringfügig verdichtet, wird eine Rückstellkraft für den Ventilkörper erzeugt. Bei entsprechender Bemessung der zusätzlichen Kammer und der die Kammer begrenzenden Wirkfläche des Ventilkörpers kann die von der verdichteten Luft in der Kammer erzeugte Kraft zum Rückstellen des Ventilkörpers ausreichen, so daß auf eine als Rückstellkraft für den Ventilkörper dienende Feder verzichtet werden kann.

Vorteilhafterweise lässt sich durch Ändern der einander entgegengerichteten Wirkflächen des Ventilkörpers und durch Verwenden unterschiedlicher Federn für das Ventil die Ansprechempfindlichkeit des Ventils verändern.

Von besonderem Vorteil ist es, wenn das in der Beatmungeinrichtung angeordnete Ventil als vorgesteuertes Ventil ausgebildet ist, welches in der Weise arbeitet, dass bei einem Hub des Kolbens des Federspeicherbremszylinders in Bremsbetätigungsrichtung zuerst die Steuerkammer des Ventils und erst dann ein Arbeitsanschluss des Ventils mit der Druckmittelkammer des Betriebsbremszylinders verbunden wird. Zu diesem Zweck weist die Beatmungseinrichtung ein zweites Ventil und gegebenenfalls ein drittes Ventil auf, wobei das zweite Ventil dem einen Arbeitsanschluss und das dritte Ventil dem Steueranschluss des als Beatmungsventil dienenden ersten Ventils vorgeschaltet ist.

Durch die Vorsteuerung des als Beatmungsventil dienenden Ventils wird erreicht, daß bei einem Hub des Kolbens des Federspeicherbremszylinders in Bremsbetätigungsrichtung, bei gleichzeitigem Vorhandensein von Druckmittel in der Druckmittelkammer des Betriebsbremszylinders, das Beatmungsventil bereits dann in seine Schließstellung gebracht wird, wenn die Verbindung zwischen dem Arbeitsanschluss des Beatmungsventils und der Druckmittelkammer des Betriebsbremszylinders noch nicht freigegeben ist.

Vorteilhafterweise ist das als Beatmungsventil dienende erste Ventil so ausgebildet und so an oder in der Kolbenstange des Federspeicherbremszylinders angeordnet, daß das Dichtelement, welches in der Durchgangsöffnung für die Kolbenstange angeordnet ist zusätzlich zu seiner Abdicht- und Führungsfunktion für die Kolbenstange die Funktion eines Dichtkörpers für das zweite Ventil und gegebenenfalls für ein drittes Ventil übernehmen kann.

Vorteilhafterweise kann das als Beatmungsventil dienende Ventil in der Art einer Ventilpatrone ausgebildet sein, welche in einer im Kolben oder in der Kolbenstange des Bremszylinders vorgesehenen Durchgangsöffnung angeordnet ist.

Bei einem als Federspeicherbremszylinder ausgebildeten Bremszylinder wird durch die erfindungsgemäße Beatmungseinrichtung für die Federkammer zudem ein gutes Ansprechverhalten des Federspeicherbremszylinders erreicht. Anhand der Zeichnung werden nachfolgend drei Ausführungsbeispiele der Erfindung näher erläutert.

Es zeigen:
- Fig. 1: einen kombinierten Federspeicher- und Betriebs- bremszylinder, mit einer an der Kolbenstange des Kolbens des Federspeicherbremszylinders an- geordneten vorgesteuerten Ventileinrichtung zum Verbinden der Federkammer des Federspeicher- bremszylinders mit der Druckmittelkammer des Betriebsbremszylinders, wobei die Druckmittel- kammer des Federspeicherbremszylinders mit Druckmittel beaufschlagt und die Druckmittel- kammer des Betriebsbremszylinders drucklos ist;
- Fig. 2: einen vergrößerten Ausschnitt des die Ventil- einrichtung aufweisenden Bereiches der Kolben- stange des Federspeicherbremszylinders gemäß Fig. 1,
- Fig. 3: den in Fig. 1 gezeigten kombinierten Federspei- cher- und Betriebsbremszylinder, wobei die Druckmittelkammer des Federspeicherbremszylin- ders und die Druckmittelkammer des Betriebs- bremszylinders drucklos sind;
- Fig. 4: einen vergrößerten Ausschnitt des die Ventil- einrichtung aufweisenden Bereiches der Kolben- stange des Federspeicherbremszylinders gemäß Fig. 3;
- Fig. 5: den in Fig. 1 gezeigten kombinierten Federspei- cher- und Betriebsbremszylinder bei druckbeauf- schlagter Druckmittelkammer des Betriebs- bremszylinders und druckbeaufschlagter Druck- mittelkammer des Federspeicherbremszylinders, wobei in der Druckmittelkammer des Federspei- cherbremszylinders die Druckabbauphase einge- leitet ist;
- Fig. 6: einen vergrößerten Ausschnitt des die Ventil- einrichtung aufweisenden Bereiches der Kolben- stange des Federspeicherbremszylinders gemäß Fig. 5,
- Fig. 7: einen kombinierten Federspeicher- und Betriebs- bremszylinder mit einem im Kolben des Feder- speicherbremszylinders angeordneten Beatmungs- ventil und einem in der Gehäusewand des Feder- speicherbremszylinders angeordneten Entlüf- tungsventil;
- Fig. 8: einen vergrößerten Ausschnitt des Bereiches des Kolbens des Federspeicherbremszylinders gemäß Fig.7, in welchem das Beatmungsventil angeord- net ist;
- Fig. 9: einen als Betriebsbremszylinder ausgebildeten Bremszylinder mit einem in der Kolbenstange an- geordneten Beatmungsventil für die Federkammer und
- Fig. 10: einen vergrößerten Ausschnitt des Bereiches der Kolbenstange des Betriebsbremszylinders gemäß Fig. 9, in welchem das Beatmungsventil angeord- net ist.

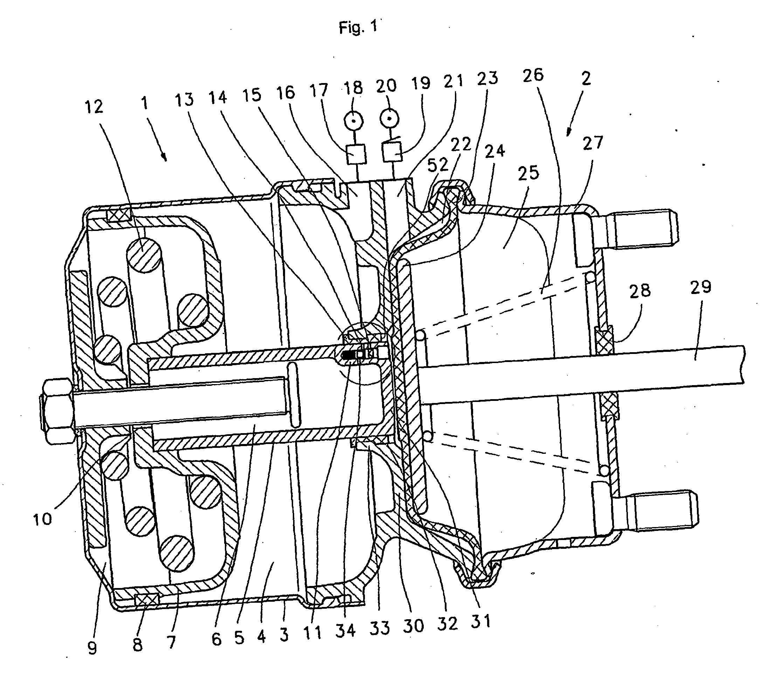

In Fig. 1 ist ein kombinierter Federspeicher- und Betriebsbremszylinder (1, 2) dargestellt, der aus einem Federspeicherbremszylinder (1) und einem Betriebsbremszylinder (2) besteht, die zu einer Baueinheit zusammengefasst sind. Der Federspeicherbremszylinder (1) weist ein Gehäuse (30, 3) auf, welches aus einer für den Federspeicherbremszylinder (1) und den Betriebsbremszylinder (2) gemeinsamen Wand (30) und einem topfförmigen Deckel (3) besteht. Im Gehäuse (30, 3) ist ein als Federspeicherkolben dienender Kolben (7) mittels eines Dichtringes (8) abgedichtet in Richtung der Längsachse des Gehäuses (30, 3) verschiebbar angeordnet. Der Kolben (7) teilt den Federspeicherbremszylinder (1) in eine als Lösekammer dienende Druckmittelkammer (4) und eine Federkammer (9) auf. In der Federkammer (9) ist eine als Speicherfeder dienende Feder (12) angeordnet, die sich mit ihrem einen Ende am Deckel (3) des Gehäuses (30, 3) abstützt und mit ihrem anderen Ende den Kolben (7) in Richtung auf die Druckmittelkammer (4) zu (Bremsbetätigungsrichtung) beaufschlagt. An der die Druckmittelkammer (4) begrenzenden Seite des Kolbens (7) ist zentrisch eine von einem Rohr gebildete Kolbenstange (5) angeordnet, die sich durch die Druckmittelkammer (4) und eine in der Wand (30) angeordnete Durchgangsöffnung (32) hindurch in Richtung auf eine als Betriebsbremskammer dienende Druckmittelkammer (22) des Betriebsbremszylinder (2) zu erstreckt. Die Kolbenstange (5) ist an ihrem der Druckmittelkammer (22) des Betriebsbremszylinders (2) zugewandten Ende mittels eines Bodenteiles (31) verschlossen. Die Wand (30) weist einen sich in die Druckmittelkammer (4) des Federspeicherbremszylinders (1) hineinerstreckenden umlaufenden Vorsprung auf, welcher die Durchgangsöffnung (32) für die Kolbenstange (5) des Federspeicherbremszylinders (1) begrenzt und als Führung (33) für die Kolbenstange (5) dient.

In der Führung (33) für die Kolbenstange (5) ist ein ringförmiges Dichtelement (13, 52) angeordnet, welches die Kolbenstange (5) dichtend umschließt und neben seiner Dichtfunktion die Funktion eines Führungselementes für die Kolbenstange (5) hat. Im Kolben (7) ist koaxial zur Kolbenstange (5) eine Durchgangsöffnung (10) für ein manuell betätigbares Federspeicherlöseelement angeordnet. Der Querschnitt für die Durchgangsöffnung (10) ist so gewählt, daß zwischen dem Federspeicherlöseelement und der die Durchgangsöffnung (10) begrenzenden Wand ein Ringspalt verbleibt, über welchen der als Verbindungskanal (6) dienende Innenraum der rohrförmigen Kolbenstange (5) mit der Federkammer (9) verbunden ist.

Über einen Druckmittelanschluss (16) in der Wand (30) des Gehäuses (30, 3) des Federspeicherbremszylinders (1) und über ein mit diesem verbundenes, z.B. als Handbremsventil (17) ausgebildetes Ventil ist die Druckmittelkammer (4) wahlweise mit einer Druckluftquelle (18) oder mit der Atmosphäre verbindbar.

An den Federspeicherbremszylinder (1) schließt der Betriebsbremszylinder (2) an, der ein Gehäuse (30, 27) aufweist. Das Gehäuse (30, 27) des Betriebsbremszylinders (2) wird von der für den Federspeicherbremszylinder (1) und den Betriebsbremszylinder (2) gemeinsamen Wand (30) und einem topfförmigen Deckel (27) gebildet. Ein aus einer Membran (23) und einem Membranteller (24) bestehender, als Betriebsbremskolben dienender Kolben (23, 24) unterteilt den Betriebsbremszylinder (2) in die als Betriebsbremskammer dienende Druckmittelkammer (22) und eine Federkammer (25). Die Membran (23) ist zwischen der Wand (30) und dem Deckel (27) des Gehäuses (30, 27) eingespannt. Der Kolben (23, 24) wird von einer Feder (26), die sich am Deckel (27) abstützt, in Richtung auf die Druckmittelkammer (22) zu (Bremslöserichtung) beaufschlagt. Am Membranteller (24) ist zentrisch eine Kolbenstange (29) angeordnet, die durch eine Durchgangsöffnung (28) im Deckel (27) hindurch aus dem Gehäuse (30, 27) herausgeführt ist. In der Durchgangsöffnung (28) ist ein die Kolbenstange (29) umschließendes Dichtelement angeordnet, welches zusätzlich zu seiner Dichtfunktion die Funktion einer Führung für die Kolbenstange (29) hat. In der Wand (30) des Gehäuses (30, 27) ist ein Druckmittelanschluss (21) angeordnet. Über den Druckmittelanschluss (21) und ein als Betriebsbremsventil (19) ausgebildetes Ventil ist die Druckmittelkammer (22) wahlweise mit einer Druckluftquelle (20) oder mit der Atmosphäre verbindbar.

Die Wand der rohrförmigen Kolbenstange (5) des Federspeicherbremszylinders (1) weist an ihrem freien Ende einen verdickten Bereich (11) auf. In dem verdickten Bereich (11) ist ein als Beatmungsventil dienendes erstes Ventil (50, 40, 34, 14, 15) der Beatmungseinrichtung für die Federkammer (9) des Federspeicherbremszylinders (1) angeordnet.

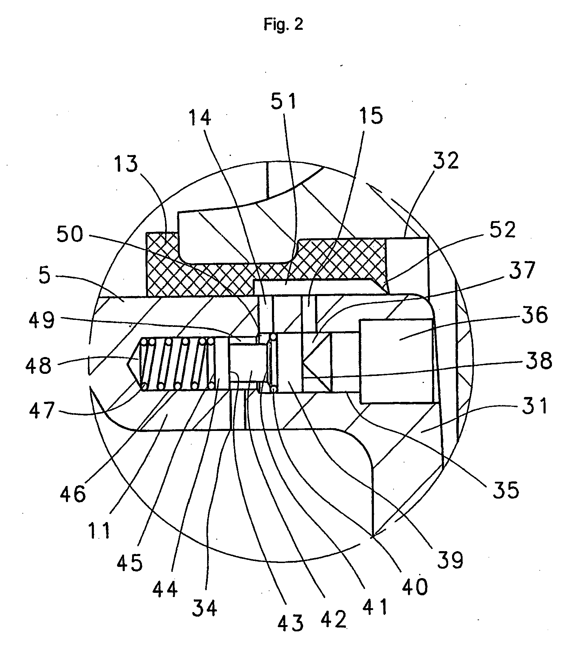

Die Beatmungseinrichtung wird nachfolgend anhand der Fig.1 und der Fig. 2 beschrieben.

Gemäß Fig. 2 ist in dem verdickten Bereich (11) der Kolbenstange (5) eine als Sackbohrung ausgebildete leicht abgestufte Bohrung (35, 46) angeordnet, die vom Bodenteil (31) der Kolbenstange (5) ausgeht und sich, in Richtung der Längsachse der Kolbenstange (5) verlaufend, in den verdickten Bereich (11) hineinerstreckt. Die Bohrung (35, 46) ist an ihrem den größeren Durchmesser aufweisenden Ende mittels eines Verschlussteiles (36) verschlossen. In dem verdickten Bereich (11) der Kolbenstange (5) sind quer zur Längsachse der Kolbenstange (5) verlaufend eine als erster Arbeitsanschluss (34) dienende erste Bohrung, eine als zweiter Arbeitsanschluss (14) dienende zweite Bohrung und eine als Steueranschluss (15) dienende dritte Bohrung angeordnet, die in die abgestufte Bohrung (35, 46) einmünden. In der Bohrung (35, 46) ist ein, der Bohrung (35, 46) entsprechend, leicht abgestufter Ventilkörper (39, 42, 44) in Richtung der Längsachse der Bohrung (35, 46) gleitend verschiebbar angeordnet. Der Ventilkörper (39, 42, 44) trägt einen ringförmigen Dichtkörper (40) und bildet mit einem von der Stufe der Bohrung (35, 46) gebildeten Ventilsitz (50) sowie dem ersten Arbeitsanschluss (34), dem zweiten Arbeitsanschluss (14) und dem Steueranschluss (15) das als Beatmungsventil für die Federkammer (9) des Federspeicherbremszylinders (1) dienende erste Ventil (50, 40, 34, 14, 15).

Das als Beatmungsventil dienende erste Ventil (50, 40, 34, 14, 15) bildet mit einem als Absperrventil dienenden zweiten Ventil (5, 14, 13, 52) und einem als Vorsteuerventil dienenden dritten Ventil (5, 15, 13, 52) eine vorgesteuerte Ventileinrichtung (50, 40, 34, 14, 15, 5, 13, 52) .

Die beiden Arbeitsanschlüsse (34 und 14) und der Steueranschluss (15) sind so in der Wand der Kolbenstange (5) und so zu dem ringförmigen Dichtelement (13, 52) und der Druckmittelkammer (22) des Betriebsbremszylinders (2) angeordnet, daß der zweite Arbeitsanschluss (14) und der Steueranschluss (15) des ersten Ventils (50, 40, 34, 14, 15) von dem Dichtelement (13, 52) überdeckt sind, wenn der Kolben (7) des Federspeicherbremszylinders (1) sich in seiner linken Endlage befindet, in welcher er die Feder (12) gespannt hält. Der Ventilkörper (39, 42, 44) weist einen eingeschnürten Bereich (42) auf, der zwischen dem den größeren Durchmesser aufweisenden Teil (39) und dem den kleineren Durchmesser aufweisenden Teil (44) des Ventilkörpers (39, 42, 44) angeordnet ist. Bedingt durch diese Ausbildung ergeben sich am Ventilkörper (39, 42, 44) eine erste Wirkfläche (38), eine der ersten Wirkfläche (38) entgegengerichtete zweite Wirkfläche (45), eine dritte Wirkfläche (41) und eine vierte Wirkfläche (43). Die erste Wirkfläche (38) und die zweite Wirkfläche (45) werden von den einander abgewandten Stirnseiten des Ventilkörpers (39, 42, 44) gebildet. Die dritte Wirkfläche (41) und die vierte Wirkfläche (43) werden von den einander zugewandten, den eingeschnürten Bereich (42) begrenzenden Seiten des Ventilkörpers (39, 42, 44) gebildet, wobei die dritte Wirkfläche (41) der ersten Wirkfläche (38) und die vierte Wirkfläche (43) der zweiten Wirkfläche (45) entgegengerichtet ist.

Von der ersten Wirkfläche (38) wird eine Steuerkammer (37) begrenzt. Der die erste Wirkfläche (38) aufweisende Bereich (39) des Ventilkörpers (39, 42, 44) hat somit die Funktion eines Steuerkolbens für das Ventil (50, 40, 34, 14, 15). Die dritte Wirkfläche (41) und die vierte Wirkfläche (43) begrenzen eine Arbeitskammer (49), über welche bei geöffnetem ersten Ventil (50, 40, 34, 14, 15) die beiden Arbeitsanschlüsse (34 und 14) miteinander verbunden sind. Eine zusätzliche Kammer (48), in welche der Ventilkörper (39, 42, 44) mit seinem den kleineren Durchmesser aufweisenden Bereich (44) eingetaucht ist, wird von der zweiten Wirkfläche (45) des Ventilkörpers (39, 42, 44) begrenzt. In der Kammer (48) ist eine als Rückstellkraft für den Ventilkörper (39, 42, 44) dienende Feder (47) angeordnet, welche den Ventilkörper (39, 42, 44) in Richtung auf die Steuerkammer (37) zu -Öffnungsrichtung des ersten Ventils (50, 40, 34, 14, 15)- beaufschlagt und so bei druckloser Steuerkammer (37) das erste Ventil (50, 40, 34, 14, 15) in seiner Offenstellung hält. Die Wirkflächen (38, 45, 41, 43) des Ventilkörpers (39, 42, 44) und die Feder (47) sind so ausgelegt, daß bei Beaufschlagung der Steuerkammer (37) mit dem Druck aus der Druckmittelkammer (22) des Betriebsbremszylinders (2) die vom Druck auf die erste Wirkfläche (38) des Ventilkörpers (39, 42, 44) in Schließrichtung des ersten Ventils (50, 40, 34, 14, 15) ausgeübte Kraft größer ist als die dieser Kraft entgegengerichtet auf den Ventilkörper (39, 42, 44) in Öffnungsrichtung des ersten Ventils (50, 40, 34, 14, 15) ausgeübte Kraft der Feder (47) des ersten Ventils (50, 40, 34, 14, 15) und der Kraft des vom Druck in der Druckmittelkammer (22) auf die Differenzwirkfläche aus der dritten Wirkfläche (41) und der vierten Wirkfläche (43) in Öffnungsrichtung des ersten Ventils (50, 40, 34, 14, 15) ausgeübte Kraft.

Bei Beaufschlagung der die Arbeitskammer (49) begrenzenden Wirkflächen (41 und 43) mit dem Druck der Druckmittelkammer (22) wird auf den Ventilkörper (39, 42, 44) eine in Öffnungsrichtung des ersten Ventils (50, 40, 34, 14, 15) wirkende Kraft erzeugt, da die der ersten Wirkfläche (38) entgegengerichtete dritte Wirkfläche (41) etwas größer ist als die vierte Wirkfläche (43), die der dritten Wirkfläche (41) entgegengerichtet ist. Die Differenz zwischen diesen Wirkflächen (43 und 41) ergibt sich zwangsläufig dadurch, daß das erste Ventil (50, 40, 34, 14, 15) als Sitzventil ausgebildet ist und deshalb der den Dichtkörper (40) tragende Teil (39) des Ventilkörpers (39, 42, 44) einen größeren Durchmesser aufweisen muß als der Teil (44) des Ventilkörpers (39, 42, 44), der in dem Teil (46) der abgestuften Bohrung (35, 46) geführt wird, welcher den Ventilsitz (50) aufweist.

Wird das erste Ventil nicht als Sitzventil sondern als Schieberventil ausgebildet, bei welchem ein als Ventilschieber ausgebildeter Ventilkörper an einer Steueröffnung vorbeigeführt wird, ist es nicht erforderlich, die Ventilbohrung und den Ventilkörper abgestuft auszubilden. Die einander gegenüber angeordneten, die Arbeitskammer begrenzenden Wirkflächen des Ventilkörpers sind dann gleich groß.

Durch unterschiedliche Flächenkombinationen am Ventilkörper (39, 42, 44), welche durch Ändern der Durchmessertoleranzen des Ventilkörpers (39, 42, 44) erreicht werden, und durch Verwendung unterschiedlicher Federn lässt sich auf einfache Art und Weise die für eine Betätigung des ersten Ventils (50, 40, 34, 14, 15) erforderliche Betätigungskraft verändern.

Da die von der zweiten Wirkfläche (45) begrenzte Kammer (48) des ersten Ventils (50, 40 34, 14, 15) durch den in die Kammer (48) eingetauchten Bereich (44) des Ventilkörpers (39, 42, 44) gegen die Druckmittelkammer (22) des Betriebsbremszylinders (2) und gegen die Federkammer (9) des Federspeicherbremszylinders (1) wenigstens annähernd druckdicht abgeschlossen ist, kann ein Ansteigen des Druckes in der Druckmittelkammer (22), bei noch geöffnetem ersten Ventil (50, 40, 34, 14, 15), nicht zum Ansteigen des Druckes in der zusätzlichen Kammer (48) führen. Da der Ventilkörper (39, 42, 44) des ersten Ventils (50, 40 34, 14, 15) beim Schließvorgang nur einen relativ kleinen Hub in Richtung auf die Kammer (48) zu ausführen muß, wird die Luft in der Kammer (48) nicht so stark verdichtet, daß die dabei entstehende Druckkraft, die auf den Ventilkörper (39, 42, 44) in Öffnungsrichtung des ersten Ventils (50, 40, 34, 14, 15) einwirkt, die Schließbewegung des Ventilkörpers (39, 42, 44) behindert.

Der erste Arbeitsanschluss (34) des ersten Ventils (50, 40, 34, 14, 15) verbindet über den Verbindungskanal (6) in der Kolbenstange (5) und die Durchgangsöffnung (10) im Kolben (7) des Federspeicherbremszylinders (1) die Federkammer (9) des Federspeicherbremszylinders (1) mit der Arbeitskammer (49) des ersten Ventils (50, 40, 34, 14, 15). Der zweite Arbeitsanschluss (14) dient bei auf Durchgang geschaltetem ersten Ventil (50, 40, 34, 14, 15) zur Verbindung der Arbeitskammer (49) mit der Druckmittelkammer (22) des Betriebsbremszylinders (2). Über den Steueranschluss (15) ist die Steuerkammer (37) des ersten Ventils (50, 40, 34, 14, 15) ebenfalls mit der Druckmittelkammer (22) des Betriebsbremszylinders (2) verbindbar.

Das Dichtelement (13, 52) weist auf seiner der Kolbenstange (5) des Federspeicherbremszylinders (1) zugewandten Seite eine Ausnehmung (51) auf, in welche der zweite Arbeitsanschluss (14) und der Steueranschluss (15) des ersten Ventils (50, 40, 34, 14, 15) einmünden, wenn diese vom Dichtelement (13, 52) überdeckt werden. Der Endbereich des Dichtelementes (13, 52), welcher der Druckmittelkammer (22) des Betriebsbremszylinders (2) zugewandt ist, ist als Dichtlippe ausgebildet, welche die Kolbenstange (5) ringförmig umschließt und dichtend an der Kolbenstange (5) anliegt. Die Dichtlippe bildet eine Steuerkante (52) für ein zweites Ventil (5, 14, 13, 52) und ein drittes Ventil (5, 15, 13, 52).

Die als zweiter Arbeitsanschluss (14) des ersten Ventils (50, 40, 34, 14, 15) dienende Bohrung in der Kolbenstange (5) hat zusätzlich die Funktion einer Steueröffnung für das als Schieberventil ausgebildete zweite Ventil (5, 14, 13, 52) und die als Steueranschluss (15) des ersten Ventils (50, 40, 34, 14, 15) dienende Bohrung in der Kolbenstange (5) hat zu diesem Zweck zusätzlich die Funktion einer Steueröffnung für das als Schieberventil ausgebildete dritte Ventil (5, 15, 13, 52). Somit bildet das Dichtelement (13, 52) mit dem zweiten Arbeitsanschluss (14) das zweite Ventil (5, 14, 13, 52) und mit dem Steueranschluss (15) das dritte Ventil (5, 15, 13, 52).

Der zweite Arbeitsanschluss (14) und der Steueranschluss (15) sind so zueinander angeordnet, dass, ausgehend von der Druckmittelkammer (22) des Betriebsbremszylinders, der Steueranschluss (15) näher zur Druckmittelkammer (22) hin gelegen ist als der zweite Arbeitsanschluss (14). Durch diese Anordnung der Anschlüsse (14 und 15) wird erreicht, daß bei einem Hub des Kolbens (7) des Federspeicherbremszylinders (1) in Bremsbetätigungsrichtung (nach rechts, in Richtung auf die Wand (30) des Federspeicherbremszylinders (1) zu) zuerst das als Vorsteuerventil dienende dritte Ventil (5, 15, 13, 52) in seine die Druckmittelkammer (22) des Betriebsbremszylinders (2) mit der Steuerkammer (37) des ersten Ventils (50, 40, 34, 14, 15) verbindende Offenstellung und dann das als Absperrventil dienende zweite Ventil (5, 14, 13, 52) in seine die Druckmittelkammer (22) des Betriebsbremszylinders (2) mit dem zweiten Arbeitsanschluss (14) des ersten Ventils (50, 40, 34, 14, 15) verbindende Offenstellung gebracht wird.

Durch diese Ausbildung des Beatmungsventils als vorgesteuertes Ventil ist gewährleistet, daß bei druckbeaufschlagter Druckmittelkammer (22) des Betriebsbremszylinders (2) und gleichzeitiger Betätigung des Kolbens (7) des Federspeicherbremszylinders (1) in Bremsbetätigungsrichtung die Federkammer (9) des Federspeicherbremszylinders (1) nicht mit der Druckmittelkammer (22) des Betriebsbremszylinders (2) verbunden wird.

Die Anordnung des dritten Ventils (5, 15, 13, 52) in der Beatmungseinrichtung ist zu diesem Zweck jedoch nicht unbedingt erforderlich. Wichtig ist es, dass bei einem Hub des Kolbens (7) des Federspeicherbremszylinders (1) in Bremsbetätigungsrichtung zuerst die Steuerkammer (37) und erst dann der zweite Arbeitsanschluss (14) des als Beatmungsventil dienenden ersten Ventils (50, 40, 34, 14, 15) mit der Druckmittelkammer (22) des Betriebsbremszylinders verbunden wird, so dass bei druckbeaufschlagter Druckmittelkammer (22) das erste Ventil (50, 40, 34, 14, 15) geschlossen wird, bevor sein Arbeitsanschluss (14) mit der Druckmittelkammer (22) verbunden wird.

Bei einem Hub des Kolbens (7) des Federspeicherbremszylinders (1) in Bremslöserichtung (nach links, in Richtung von der Wand (30) weg) wird zuerst das zweite Ventil (5, 14, 13, 52) und dann das dritte Ventil (5, 15, 13, 52) in seine Schließstellung gebracht.

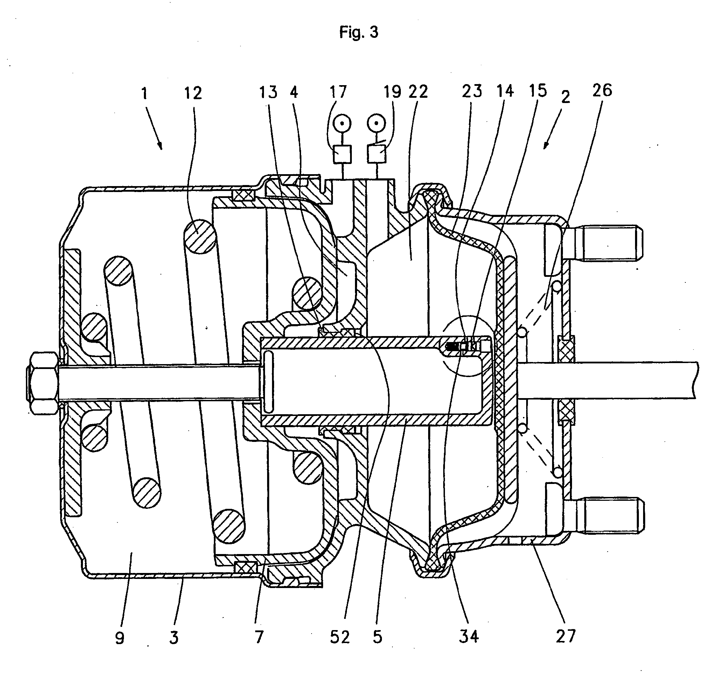

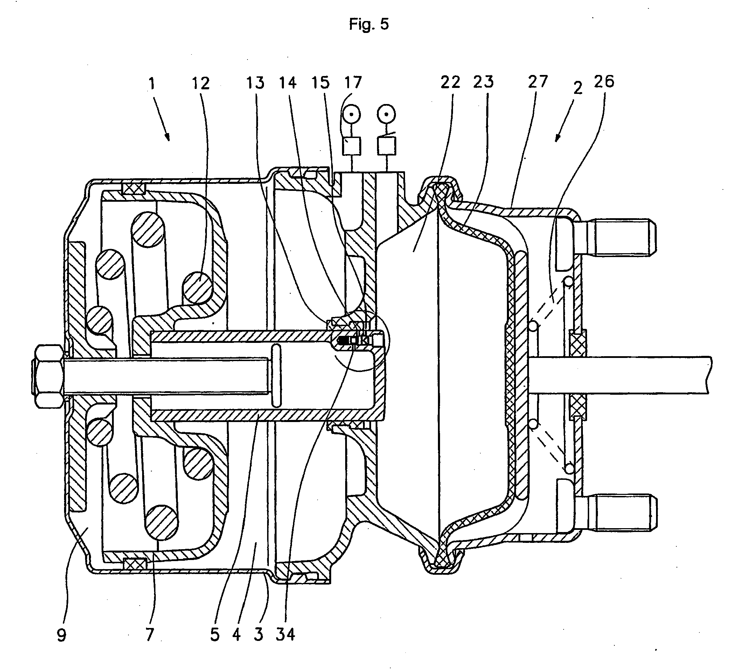

Die in den Figuren 3 und 5 gezeigten kombinierten Federspeicher- und Betriebsbremszylinder werden nicht näher beschrieben, da sie in ihrem Aufbau dem in Fig. 1 gezeigten kombinierten Federspeicher- und Betriebsbremszylinder entsprechen. Diese Figuren dienen lediglich zum besseren Verständnis der Funktion der erfindungsgemäßen Beatmungseinrichtung.

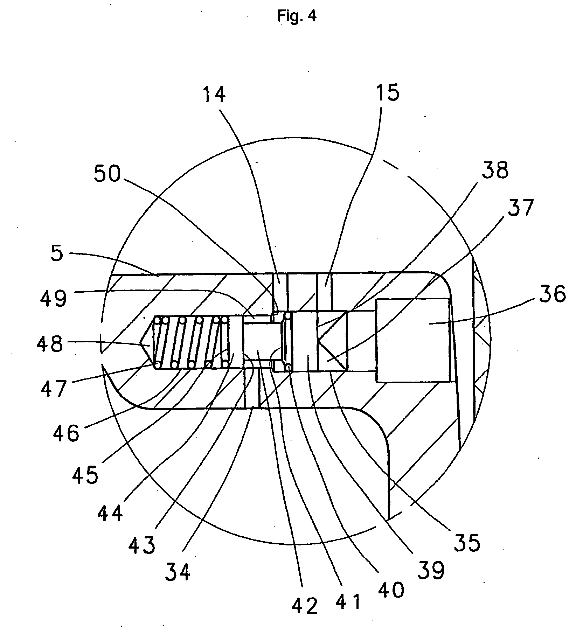

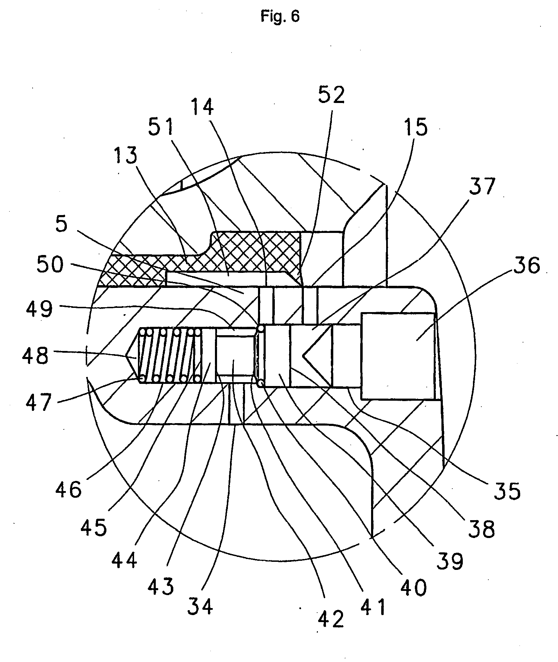

Das gleiche gilt für die in den Fig. 4 und 6 gezeigten Ventile -Beatmungsventil (50, 40, 34, 14, 15), Vorsteuerventil (5, 15, 13, 52) und Absperrventil (5, 14, 13, 52)-des kombinierten Federspeicher- und Betriebsbremszylinders, welche den in Fig. 2 gezeigten Ventilen entsprechen.

Die Figuren 1, 3 und 5 zeigen den kombinierten Federspeicher- und Betriebsbremszylinder in unterschiedlichen Betriebsstellungen. Die Figuren 2, 4 und 6 zeigen die als Beatmungseinrichtung für die Federkammer des Federspeicherbremszylinders dienenden Ventile in den Schaltstellungen, die sie bei den unterschiedlichen Betriebsstellungen des kombinierten Federspeicher- und Betriebsbremszylinders eingenommen haben.

Die Funktion der erfindungsgemäßen Beatmungseinrichtung wird nachfolgend näher erläutert.

Gemäß Fig. 1 und Fig. 2 befindet der kombinierte Federspeicher- und Betriebsbremszylinder (1 ,2) sich in einer Betriebsstellung, in welcher die Druckmittelkammer (4) des Federspeicherbremszylinders (1) mit Druck beaufschlagt und die Druckmittelkammer (22) des Betriebsbremszylinders (2) drucklos ist. Die Feder (12) des Federspeicherbremszylinders (1) ist mittels des Kolbens (7), welcher sich in seiner linken Endlage befindet, gespannt. In dieser Position des Kolbens (7) werden der zweite Arbeitsanschluss (14) und der Steueranschluss (15) des ersten Ventils (50, 40, 34, 14, 15) von dem Dichtelement (13, 52) überdeckt. Das erste Ventil (50, 40, 34, 14, 15) befindet sich in seiner Offenstellung. Das zweite Ventil (5, 14, 13, 52) und das dritte Ventil (5, 15, 13, 52) befinden sich in ihrer Schließstellung, so daß die Steuerkammer (37) und der zweite Arbeitsanschluss (14) gegen die Druckmittelkammer (22) des Betriebsbremszylinders (2) abgesperrt sind. Die Federkammer (9) des Federspeicherbremszylinders ist somit mittels des zweiten Ventils (5, 14, 13, 52) gegen die Druckmittelkammer (22) des Betriebsbremszylinders (2) abgesperrt (Fig.2).

Wird über das Betriebsbremsventil (19) Druckluft in die Druckmittelkammer (22) des Betriebsbremszylinders (2) eingesteuert, so wird dessen Kolben (23, 24) von dem sich in der Druckmittelkammer (22) aufbauenden Druck in Bremsbetätigungsrichtung, das heißt, gegen die Kraft der Feder (26) in Richtung auf die Federkammer (25) zu, angetrieben. Der Kolben (7) des Federspeicherbremszylinders (1) verbleibt dabei in seiner in Fig. 1 dargestellten Stellung, solange die Druckmittelkammer (4) des Federspeicherbremszylinders (1) nicht entlüftet wird. Das erste Ventil (50, 40, 34, 14, 15) befindet sich in seiner Offenstellung (Grundstellung), in welcher der erste Arbeitsanschluss (34) und der zweite Arbeitsanschluss (14) miteinander verbunden sind. Das zweite Ventil (5, 14, 13, 52) und das dritte Ventil (5, 15, 13, 52) verbleiben in ihrer Schließstellung. Diese Stellung entspricht der in Fig. 2 gezeigten Stellung des ersten Ventils (50, 40, 34, 14, 15), des zweiten Ventils (5, 14, 13, 52) und des dritten Ventils (5, 15, 13, 52).

Wird die Druckmittelkammer (22) des Betriebsbremszylinders (2) wieder entlüftet, kehrt der Kolben (23, 24) des Betriebsbremszylinders (2), bewirkt durch die Kraft der Feder (26), in seine Ausgangsstellung zurück.

Wird, wie in Fig. 3 und Fig. 4 dargestellt, die Druckmittelkammer (4) des Federspeicherbremszylinders (1) über das als Handbremsventil dienende Ventil (17) entlüftet, wird der Kolben (7) des Federspeicherbremszylinders (1) von der sich dabei entspannenden Feder (12) in Bremsbetätigungsrichtung angetrieben. Dabei wird der Kolben (23, 24) des Betriebsbremszylinders (2) mittels der Kolbenstange (5) des Kolbens (7) des Federspeicherbremszylinders (1) in der gleichen Richtung angetrieben. Bei diesem Vorgang überfahren der Steueranschluss (15) und der zweite Arbeitsanschluss (14) des ersten Ventils (50, 40, 34, 14, 15) die Steuerkante (52) des Dichtelementes (13, 52). Das zweite Ventil (5, 14, 13, 52) und das dritte Ventil (5, 15, 13, 52) gelangen dabei in ihre Offenstellung. Über den Kanal (6) in der Kolbenstange (5), das sich bereits in der Offenstellung befindliche erste Ventil (50, 40, 34, 14, 15) und das geöffnete zweite Ventil (5, 14, 13, 52) ist die Federkammer (9) des Federspeicherbremszylinders (1) dann mit der drucklosen Druckmittelkammer (22) des Betriebsbremszylinders (2) verbunden. Die Druckmittelkammer (22) steht über das Betriebsbremsventil (19) mit der Atmosphäre in Verbindung.

Wird in die Druckmittelkammer (4) des Federspeicherbremszylinders (1) Druckmittel eingesteuert, bewegt der Kolben (7) sich in Richtung auf die Federkammer (9) zu. Die in der Federkammer (9) befindliche Luft wird dabei über das geöffnete erste Ventil (50, 40, 34, 14, 15) und das geöffnete zweite Ventil (5, 14, 13, 52) in die Druckmittelkammer (22) des Betriebsbremszylinders (2) gedrückt. Von der Druckmittelkammer (22) des Betriebsbremszylinders (2) gelangt diese Luft über das geöffnete Betriebsbremsventil zur Atmosphäre hin. Erst im letzten Teil des Hubes des Kolbens (7) des Federspeicherbremszylinders (1) gelangt das zweite Ventil (5, 14, 13, 52) in seine Schließstellung und sperrt die Verbindung zwischen der.Federkammer (9) des Federspeicherbremszylinders (1) und der Druckmittelkammer (22) des Betriebsbremszylinders (2), so dass bei der weiteren Bewegung des Kolbens (7) in der gleichen Richtung ein geringer Überdruck in der Federkammer (9) entstehen kann. Durch die Anordnung eines Entlüftungsventils in der Wand des Gehäuses (30, 3) des Federspeicherbremszylinders (1) kann auch dieser geringe Überdruck in der Federkammer (9) zur Atmosphäre hin abgebaut werden.

Wird in die Druckmittelkammer (22) des Betriebsbremszylinders (2), bei druckloser Druckmittelkammer (4) des Federspeicherbremszylinders (1), über das Betriebsbremsventil (19) Druckluft eingesteuert, beaufschlagt diese auch die Steuerkammer (37) des ersten Ventils (50, 40, 34, 14, 15). Gleichzeitig gelangt die Druckluft über den zweiten Arbeitsanschluss (14), die Arbeitskammer (49) und den ersten Arbeitsanschluss (34) des ersten Ventils (50, 40, 34, 14, 15) sowie den Kanal (6) in der Kolbenstange (5) in die Federkammer (9) des Federspeicherbremszylinders. Da die Druckluft jedoch nicht in die Kammer (48) des ersten Ventils (50, 40, 34, 14, 15) gelangen und deshalb auch nicht die zweite Wirkfläche (45) des Ventilkörpers (39, 42, 44), welche der die Steuerkammer (37) begrenzenden ersten Wirkfläche (38) des Ventilkörpers (39, 42, 44) entgegengerichtet ist, beaufschlagen kann, wird der Schließvorgang des ersten Ventils (50, 40, 34, 14, 15) nicht behindert und somit auch nicht verzögert. Es gelangt deshalb auch nur eine vernachlässigbar kleine Menge Druckluft in die Federkammer (9) des Federspeicherbremszylinders (1).

Wird, wie in Fig. 5 dargestellt, die Druckmittelkammer (4) des Federspeicherbremszylinders (1) über das Handbremsventil (17) mit der Atmosphäre verbunden, während die Druckmittelkammer (22) des Betriebsbremszylinders (2) noch mit Druck beaufschlagt ist, wird der Kolben (7) des Federspeicherbremszylinders (1) durch die Kraft der sich dabei entspannenden Feder (12) des Federspeicherbremszylinders (1) in Bremsbetätigungsrichtung, das heißt, nach rechts, in Richtung auf die Druckmittelkammer (4) zu, angetrieben. Dabei taucht die Kolbenstange (5) des Federspeicherbremszylinders (1) in die Druckmittelkammer (22) des Betriebsbremszylinders (2) ein. Dadurch, daß der Steueranschluss (15), gesehen von der Druckmittelkammer (22) aus, vor dem zweiten Arbeitsanschluss (14) des ersten Ventils (50, 40, 34, 14, 15) angeordnet ist, überfährt der Steueranschluss (15) die Steuerkante (52) des Dichtelementes (13, 52) bereits dann, wenn der zweite Arbeitsanschluss (14) noch von dem Dichtelement (13, 52) überdeckt wird. Die Steuerkante (52) des Dichtelementes (13, 52) befindet sich dann zwischen dem Steueranschluss (15) und dem zweiten Arbeitsanschluss (14), wie in Fig. 6 erkennbar ist. Druckluft aus der Druckmittelkammer (22) des Betriebsbremszylinders (2) gelangt dann über den Steueranschluss (15) in die Steuerkammer (37) des ersten Ventils (50, 40, 34, 14, 15). Ist der Druck in der Druckmittelkammer (22) so weit angestiegen, daß seine auf die erste Wirkfläche (38) des Ventilkörpers (39, 42, 44) ausgeübte Kraft die dieser Kraft entgegengerichtet auf die zweite Wirkfläche (45) des Ventilkörpers (39, 42, 44) ausgeübte Kraft der Feder (47) überwindet, bewegt der Ventilkörper (39, 42, 44) sich nach links in Richtung auf die zusätzliche Kammer (48) des ersten Ventils (50, 40, 34, 14, 15) zu, soweit, bis er mit seinem Dichtkörper (40) am Ventilsitz (50) zur Anlage kommt. Das erste Ventil (50, 40, 34, 14, 15) ist dann geschlossen. Bei der weiteren Bewegung der mit dem Kolben (7) verbundenen Kolbenstange (5) des Federspeicherbremszylinders (1) in Richtung auf die Druckmittelkammer (22) zu überfährt der zweite Arbeitsanschluss (14) des ersten Ventils (50, 40, 34, 14, 15) die Steuerkante (52) des Dichtelementes (13, 52). Der zweite Arbeitsanschluss (14) des ersten Ventils (50, 40, 34, 14, 15) ist dann dem Druck in der Druckmittelkammer (22) des Betriebsbremszylinders (2) ausgesetzt. Da das erste Ventil (50, 40, 34, 14, 15) jedoch vorher in seine Schließstellung gelangt ist, bleibt die Druckmittelkammer (22) des Betriebsbremszylinders (2) gegen die Federkammer (9) des Federspeicherbremszylinders (1) abgesperrt.

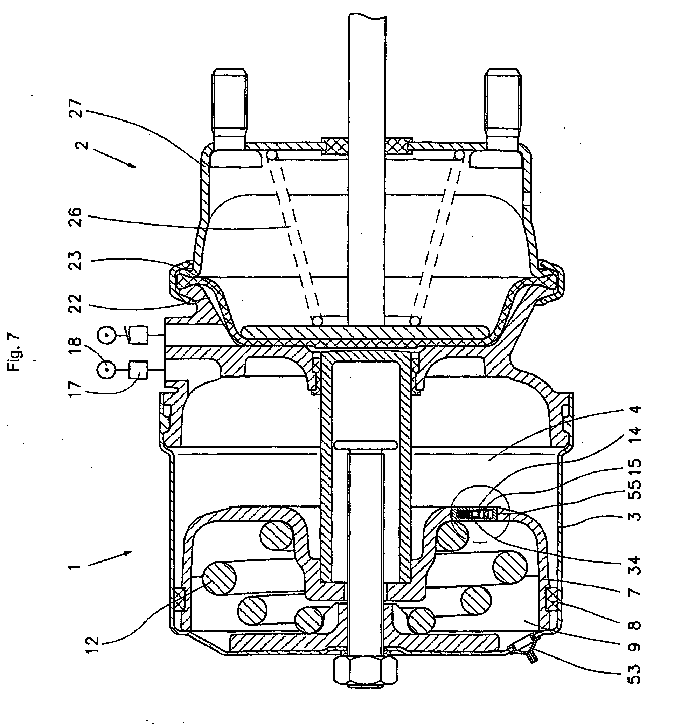

In Fig. 7 ist ein kombinierter Federspeicher- und Betriebsbremszylinder dargestellt, der im wesentlichen den gleichen Aufbau aufweist, wie der in Fig. 1 dargestellte kombinierte Federspeicher- und Betriebsbremszylinder. Der besseren Übersicht halber sind deshalb gleiche Bauteile mit gleichen Bezugszeichen versehen.

Bei diesem kombinierten Federspeicher- und Betriebsbremszylinder ist die Federkammer (9) des Federspeicherbremszylinders (1) nicht mit der Druckmittelkammer (22) des Betriebsbremszylinders (2) sondern mit der Druckmittelkammer (4) des Federspeicherbremszylinders (1) verbindbar.

Die Beatmungseinrichtung für die Federkammer (9) ist zu diesem Zweck in der Wand des Kolbens (7) des Federspeicherbremszylinders (1) angeordnet.

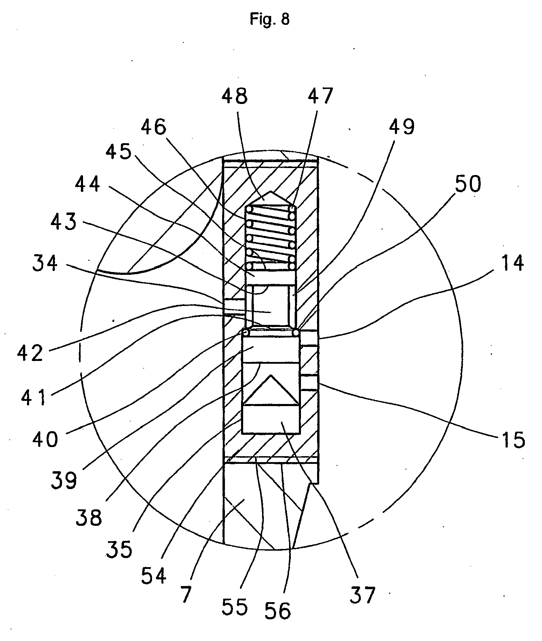

Wie in Fig. 8 zu erkennen ist, weist das als druckgesteuertes Beatmungsventil ausgebildete Ventil (54, 50, 40, 34, 14, 15) im wesentlichen den gleichen Aufbau auf, wie das in Fig. 2 dargestellte Beatmungsventil. Im Gegensatz zu dem in Fig. 2 gezeigten Beatmungsventil wird jedoch das Gehäuse des Beatmungsventils nicht von einem Teil der Kolbenstange (5) oder des Kolbens (7) des Bremszylinders gebildet.

Das als Beatmungsventil dienende Ventil ist als ein eigenständiges Ventil ausgebildet, welches ein Gehäuse (54) aufweist, in dem die leicht abgestufte Bohrung (35, 46) angeordnet ist. In der Bohrung (35, 46) ist der Ventilkörper (39, 42, 44) in Richtung der Längsachse der Bohrung (35, 46) bewegbar angeordnet. Der erste Arbeitsanschluss (34), der zweite Arbeitsanschluss (14) und der Steueranschluss (15) werden von Bohrungen gebildet, die quer zur Längsachse der abgestuften Bohrung (35, 46) verlaufend die Wand des Gehäuses (54) durchdringen. Der Ventilkörper (39, 42, 41) weist die erste Wirkfläche (38), die der ersten Wirkfläche (38) entgegengerichtete zweite Wirkfläche (45), die der ersten Wirkfläche (38) entgegengerichtete dritte Wirkfläche (41) und die der zweiten Wirkfläche (45) entgegengerichtete vierte Wirkfläche (43) auf. Des weiteren sind im Gehäuse (54) die von der ersten Wirkfläche (38) begrenzte Steuerkammer (37), die von der dritten Wirkfläche (41) und der vierten Wirkfläche (43) begrenzte Arbeitskammer (49) sowie die von der zweiten Wirkfläche (45) begrenzte zusätzliche Kammer (48) angeordnet, in welcher auch die Feder (47) angeordnet ist. Die beiden Arbeitsanschlüsse (34 und 14) münden in die Arbeitskammer (49) ein und der Steueranschluss (15) mündet in die Steuerkammer (37) ein. Die Stufe der abgestuften Bohrung (35, 46) ist als Ventilsitz (50) ausgebildet, welcher mit dem auf dem Ventilkörper (39, 42, 44) angeordneten ringförmigen Dichtkörper (40) das Ventil bildet.

Der Kolben (7) des Federspeicherbremszylinders (1) weist eine Durchgangsöffnung (55) auf, in deren begrenzende Wand Gewinde (56) eingeschnitten ist. In die Durchgangsöffnung (55) ist das als Beatmungsventil dienende Ventil (54, 50, 40, 34, 14, 15) eingeschraubt. Der Steueranschluss (15) und der zweite Arbeitsanschluss (14) stehen mit der Druckmittelkammer (4) und der erste Arbeitsanschluss (34) steht mit der Federkammer (9) des Federspeicherbremszylinders (1) in Verbindung. Im Deckel (3) des Gehäuses des Federspeicherbremszylinders (1) ist ein Entlüftungsventil (53) angeordnet.

Auf eine Vorsteuerung des als Beatmungsventil dienenden Ventils (54, 50, 40, 34, 14, 15) mittels eines Vorsteuerventils und eines Absperrventils, mittels welchen in Abhängigkeit vom Kolbenhub der zweite Arbeitsanschluss (14) und der Steueranschluss (15) absperrbar sind, wird bei dieser Beatmungseinrichtung verzichtet.

Diese Beatmungseinrichtung arbeitet in der Weise, daß sich das Ventil (54, 50, 40, 34, 14, 15) bei druckloser Druckmittelkammer (4) des Federspeicherbremszylinders (1) in seiner Offenstellung befindet, wobei es die Druckmittelkammer (4) und die Federkammer (9) des Federspeicherbremszylinders (1) miteinander verbindet. Wird über das als Handbremsventil dienende Ventil (17) in die Druckmittelkammer (4) Druckmittel eingesteuert, bewirkt der sich in der Druckmittelkammer (4) aufbauende Druck, daß der Kolben (7) sich gegen die Kraft der Feder (12) in Richtung auf die Federkammer (9) zu bewegt. Gleichzeitig beaufschlagt der Druck in der Druckmittelkammer (4) die Steuerkammer (37) und den zweiten Arbeitsanschluss (14) des Ventils (54, 50, 34, 14, 15). Ist der Druck so weit angestiegen, daß seine auf die erste Wirkfläche (38) des Ventilkörpers (39, 42, 44) ausgeübte Kraft die entgegengerichtet auf die Differenzwirkfläche aus der dritten Wirkfläche (41) und der vierten Wirkfläche (43) des Ventilkörpers (39, 42, 44) einwirkende Kraft sowie die in Öffnungsrichtung des Ventils (54, 50, 40, 34, 14, 15) auf den Ventilkörper (39, 42, 44) einwirkende Kraft der Feder (47) überwindet, gelangt das Ventil (54, 50, 40, 34, 14, 15) in seine Schließstellung. Die Federkammer (9) und die Druckmittelkammer (4) des Federspeicherbremszylinders (1) sind dann gegeneinander abgesperrt.

Durch den sich in der Druckmittelkammer (4) weiter aufbauenden Druck wird der Kolben (7) gegen die Kraft der Feder (12) in Richtung auf die Federkammer (9) zu verschoben. Der dabei entstehende Staudruck in der Federkammer (9) bewirkt bei Erreichen einer vorbestimmten Kraft - Schließkraft des Entlüftungsventils (53)-, dass dieses öffnet. Der Überdruck in der Federkammer (9) baut sich dann zur Atmosphäre hin ab.

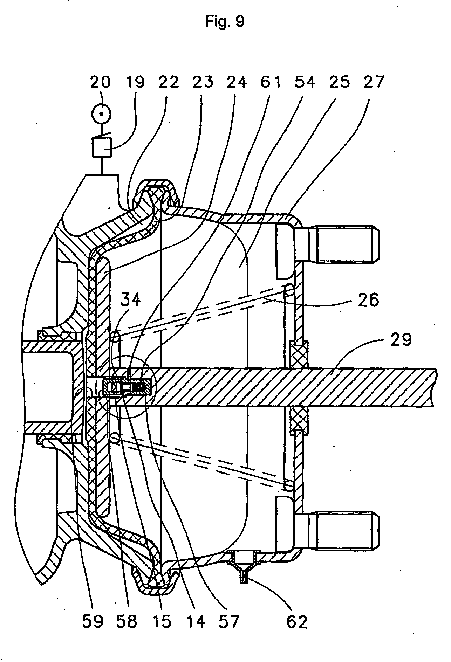

Fig. 9 zeigt den Betriebsbremszylinder, der den von eine Membran (23) und einem Membranteller (24) gebildeten Kolben (23, 24) aufweist. Am Membranteller (24) ist die Kolbenstange (29) des Betriebsbremszylinders angeordnet. In der Membran (23), dem Membranteller (24) und der dem Membranteller (24) zugewandten Stirnseite der Kolbenstange (29) ist zentrisch eine leicht abgestufte Bohrung (59, 58, 57) angeordnet, die sich, ausgehend von der Membran (23), durch die Membran (23) und den Membranteller (24) hindurch in die Kolbenstange (29) hineinerstreckt. Die Bohrung (59, 58, 57) ist als Sackbohrung ausgebildet. In der Bohrung (59, 58, 57) ist das bereits beschriebene Beatmungsventil (54, 50, 40, 34, 14, 15) angeordnet, welches den ersten Arbeitsanschluss (34), den zweiten Arbeitsanschluss (14) und den Steueranschluss (15) aufweist. Die Membran (23) und der Membranteller (24) sowie die Klobenstange (29) sind im Bereich der abgestuften Bohrung (57, 58, 59) gegenüber dieser Bohrung (57, 58, 59) abgedichtet miteinander verbunden, so dass eine Verbindung der Federkammer (25) mit der Druckmittelkammer (22) nur über das Ventil (54, 50, 34, 14, 15) erfolgen kann.

Das Beatmungsventil (54, 50, 40, 34, 14, 15) ist als ein eigenständiges Ventil ausgebildet, welches das Gehäuse (54) aufweist. Die beiden Arbeitsanschlüsse (34 und 14) und der Steueranschluss (15) werden von die Wand des Gehäuses (54) durchdringenden Bohrungen gebildet. Das Beatmungsventil (54, 50, 40, 34, 14, 15) ist, der abgestuften Bohrung (59, 58, 57) im Kolben (23, 24) und in der Kolbenstange (29) entsprechend, ebenfalls abgestuft ausgebildet und so in der Bohrung (59, 58, 57) der Kolbenstange (29) angeordnet, daß es mit seinem ersten Arbeitsanschluss (34) an eine Bohrung (61) in der Kolbenstange (29) anschließt. Die Bohrung (61) ist quer zur Längsachse der Kolbenstange (29) verlaufend so in dieser angeordnet, daß sie den ersten Arbeitsanschluss (34) des Beatmungsventils (54, 50, 40, 34, 14, 15) mit dem Federraum (25) des Betriebsbremszylinders verbindet. Der zweite Arbeitsanschluss (14) und der Steueranschluss (15) des Beatmungsventils (54, 50, 40, 34, 14, 15) münden in den Teil (59, 58) der abgestuften Bohrung (59, 58, 57), der einen größeren Durchmesser aufweist als das Beatmungsventil (54, 50, 40, 34, 14, 15). Über diesen Teil (59, 58) der Bohrung (59, 58, 57) der Kolbenstange (29) sind der zweite Arbeitsanschluss (14) und der Steueranschluss (15) mit der Druckmittelkammer (22) des Betriebsbremszylinders verbunden. Im Bereich zwischen dem ersten Arbeitsanschluss (34) und dem zweiten Arbeitsanschluss (14) des Beatmungsventils (54, 50, 40, 34, 14, 15) sind zwischen einem flanschartigen Teil des Gehäuses (54) des Beatmungsventils (54, 50, 40, 34, 14, 15) und der Stufe der Bohrung (59, 58, 57) der Kolbenstange (29) Dichtmittel, wie z.B. ein Dichtring (60) oder flüssiges Dichtmittel vorgesehen. Das Dichtmittel verhindert, daß über einen möglichen Spalt zwischen dem Gehäuse (54) des Beatmungsventils (54, 50, 40, 34, 14, 15) und dem Teil (57) der Wand der Bohrung (59, 58, 57) (z.B. durch Fertigungstoleranzen bedingt) eine ungewollte Verbindung zwischen der Druckmittelkammer (22) und der Federkammer (25) entstehen kann.

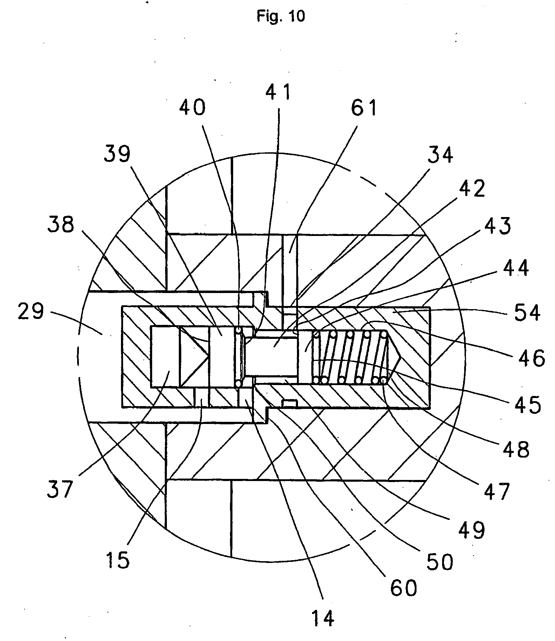

Das Beatmungsventil (54, 50, 40, 34, 14, 15) arbeitet in der Weise, daß der Ventilkörper (39, 42, 44) sich bei druckloser Druckmittelkammer (22) in der in Fig. 10 gezeigten Stellung befindet. Der erste Arbeitsanschluss (34) und der zweite Arbeitsanschluss (14) sind über das geöffnete Beatmungsventil (54, 50, 40, 34, 14, 15) miteinander verbunden. Somit ist über das geöffnete Beatmungsventil (54, 50, 40, 34, 14, 15) auch die Druckmittelkammer (22) mit der Federkammer (25) verbunden.

Wird in die Druckmittelkammer (22) Druck eingesteuert, gelangt Druck aus der Druckmittelkammer (22) über den Teil (59, 58) der Bohrung (59, 58, 57) in der Kolbenstange (29) und den Steueranschluss (15) in die Steuerkammer (37) des Beatmungsventils (54, 50, 40, 34, 14, 15). Ist die vom Druck auf die erste Wirkfläche (38) des Ventilkörpers (39, 42, 44) ausgeübte Kraft so groß, daß sie die dieser Kraft entgegengerichtet auf den Ventilkörper (39, 42, 44) ausgeübte Kraft der Feder (47) überwindet, gelangt der Ventilkörper (39, 42, 44) mit seinem Dichtelement (40) am Ventilsitz (50) zur Anlage. Das Beatmungsventil (54, 50, 40, 34, 14, 15) befindet sich dann in seiner Schließstellung, in welcher es den ersten Arbeitsanschluss (34) und den zweiten Arbeitsanschluss (14) und somit die Druckmittelkammer (22) gegen die Federkammer (25) absperrt. Durch den sich in der Druckmittelkammer (22) weiter aufbauenden Druck wird der Kolben (23, 24) gegen die Kraft der Feder (26) in Richtung auf die Federkammer (25) zu verschoben. Der dabei entstehende Staudruck in der Federkammer (25) bewirkt bei Erreichen einer vorbestimmten Kraft -Schließkraft des Entlüftungsventils (62)-, daß dieses öffnet. Der Überdruck in der Federkammer (25) baut sich dann zur Atmosphäre hin ab.

Von besonderer Bedeutung für die erfindungsgemäße Beatmungseinrichtung ist es, daß die Wirkfläche (45) des Ventilkörpers (39, 42, 44), welche an dem der Steuerkammer (37) abgewandten Ende des Ventilkörpers (39, 42, 44) angeordnet ist, gegen die Federkammer (9) und auch gegen die Druckmittelkammer (22) des Bremszylinders weitestgehend abgeschirmt ist. Durch diese Maßnahme wird verhindert, daß bei Beaufschlagung der Druckmittelkammer (4, 22) des Bremszylinders (1,2) mit Druckluft, in der Schließphase des Ventils (50, 40, 34, 14, 15) sich möglicherweise in der Federkammer aufbauender Druck die der Steuerkammer (37) des Ventils (50, 40, 34, 14, 15) abgewandte Seite des Ventilkörpers (39, 42, 44) beaufschlagt und so den Schließvorgang des Ventils (50, 40, 34, 14, 15) behindert.

Zwischen dem Bereich des Ventilkörpers, welcher in die zusätzliche Kammer eingetaucht ist, und der diese Kammer begrenzenden Wand kann ein Dichtelement angeordnet werden, um diese Kammer druckdicht abzuschließen.

Unter einem bewegbaren Ventilkörper ist im Zusammenhang mit der Erfindung jedes bewegbare Teil eines Ventils zu verstehen, welches mit einer Steueröffnung (Schieberventil) oder einem Ventilsitz (Sitzventil) zusammen das Ventil bildet oder welches als Träger für einen Dichtkörper oder ein einen Dichtkörper tragendes Ventilglied dient (z.B. Ventilkolben, Steuerkolben).

Die den einen Arbeitsanschluss des Beatmungsventils mit der Federkammer verbindende Verbindungsleitung kann von dem Innenraum der rohrförmigen Kolbenstange oder, bei einer Kolbenstange aus vollem Material, von einer die Kolbenstange in Richtung ihrer Längsachse teilweise durchdringenden Bohrung oder auch von einer Verbindungsleitung gebildet werden, die in oder an der Kolbenstange verlegt ist.

Die Ausführung der erfindungsgemäße Beatmungseinrichtung, bei welcher auf eine Vorsteuerung des Beatmungsventils verzichtet wird, kann sowohl in einem kombinierten Federspeicher- und Betriebsbremszylinder als auch in einem Federspeicherbremszylinder, welcher keinen Betriebsbremsteil aufweist, oder auch in einem einfachen Betriebsbremszylinder ohne Federspeicherteil eingesetzt werden.

Die Steuerkante für das zweite Ventil und das dritte Ventil braucht nicht von dem auch als Führung für die Kolbenstange des Federspeicherbremszylinders dienenden Dichtelement gebildet zu werden. Es kann auch ein von diesem Dichtelement unabhängiger Dichtkörper vorgesehen werden, der die Funktion einer Steuerkante übernimmt.

Es ist selbstverständlich möglich, auch bei dem kombinierten Federspeicher- und Betriebsbremszylinder auf das zweite Ventil und das dritte Ventil zu verzichten. Die Beatmung der Druckmittelkammer des Federspeicherbremszylinders aus der Druckmittelkammer des Betriebsbremszylinders erfolgt dann unabhängig davon, ob die Druckmittelkammer des Federspeicherbremszylinders mit Druckmittel beaufschlagt oder drucklos ist. Das als Beatmungsventil dienende Ventil befindet sich so lange in seiner Offenstellung, wie die Druckmittelkammer des Betriebsbremszylinders entlüftet ist. Bei Druckeinsteuerung in die Druckmittelkammer des Betriebsbremszylinders gelangt das Ventil in seine Schließstellung.

Bei der Ausführungsform der erfindungsgemäßen Beatmungseinrichtung, bei welcher das als Beatmungsventil dienende erste Ventil mit einem zweiten Ventil und gegebenenfalls mit einem dritten Ventil zusammenwirkt, kann auch auf die zusätzliche Kammer des ersten Ventils verzichtet werden. Das Schaltverhalten des ersten Ventils ist dann allerdings nicht mehr ganz so gut, wie bei einem Ventil, welches mit dieser zusätzlichen Kammer ausgerüstet ist.

Das Gehäuse des Beatmungsventils muß nicht von der Wand der Kolbenstange oder von einem Teil des Federspeicherkolbens gebildet werden. Das Beatmungsventil kann selbstverständlich ein eigenes Gehäuse aufweisen, in welchem der Ventilkörper bewegbar angeordnet ist und welches Arbeitsanschlüsse und einen Steueranschluss aufweist. Ein solches eigenständiges Ventil kann dann an der Kolbenstange oder an dem Kolben oder in einer entsprechend ausgebildeten Bohrung oder Ausnehmung in der Kolbenstange oder im Kolben oder auch in bzw. an einem mit dem Kolben oder der Kolbenstange verbundenen Teil angeordnet werden. Bei dieser Ausführung der Beatmungseinrichtung wird das Ventil vorzugsweise an der der Druckmittelkammer des Betriebsbremszylinders zugewandten Stirnseite der Kolbenstange des Federspeicherbremszylinders oder zumindest im Bereich dieser Stirnseite der Kolbenstange angeordnet.

## Patentansprüche

1. Beatmungseinrichtung für einen als Federspeicherbremszylinder (1) ausgebildeten Bremszylinder, der mit einem als Betriebsbremszylinder (2) ausgebildeten weiteren Bremszylinder baulich vereinigt ist, mit folgenden Merkmalen:
a) der Federspeicherbremszylinder (1) weist einen durch eine Feder (12) betätigbaren Kolben (7) auf, der den Federspeicherbremszylinder (1) in eine Druckmittelkammer (4) und eine die Feder (12) aufnehmende Federkammer (9) aufteilt;
b) der Betriebsbremszylinder (2) weist einen durch Druckmittel gegen die Kraft einer Feder (26) betätigbaren Kolben (23, 24) auf, der den Betriebsbremszylinder (2) in eine Druckmittelkammer (22) und eine die Feder (26) aufnehmende Federkammer (25) aufteilt;
c) am Kolben (7) des Federspeicherbremszylinders (1) ist eine Kolbenstange (5) angeordnet, welche sich durch eine Durchgangsöffnung (32) in einer Wand (30), welche die Druckmittelkammer (4) des Federspeicherbremszylinders (1) von der Druckmittelkammer (22) des Betriebsbremszylinders (2) trennt, hindurch, in Richtung auf die Druckmittelkammer (22) des Betriebsbremszylinders (2) zuerstreckt, wobei die Kolbenstange (5) mittels eines die Kolbenstange (5) ringförmig umschließenden Dichtelementes (13, 52) abgedichtet in der Durchgangsöffnung (32) geführt wird;
d) die Beatmungseinrichtung weist ein in oder an der Kolbenstange (5) des Kolbens (7) des Federspeicherbremszylinders (1) angeordnetes erstes Ventil (50, 40, 34, 14) auf, über welches bei Druckentlastung der Druckmittelkammer (4) des Federspeicherbremszylinders (1) eine Beatmung der Federkammer (9) des Federspeicherbremszylinders (1) aus der Druckmittelkammer (22) des Betriebsbremszylinders (2) herbeiführbar ist;
e) das erste Ventil (50, 40, 34, 14) ist so ausgebildet, daß es bei Einsteuerung von Druckmittel in die Druckmittelkammer (22) des Betriebsbremszylinders (2) gegen eine Rückstellkraft von seiner offenen Grundstellung in seine Schließstellung bringbar ist;
**gekennzeichnet durch** die folgenden Merkmale:
f) das erste Ventil (50, 40, 34, 14, 15) weist eine Arbeitskammer (49), eine mit dem Druck der.Druckmittelkammer (22) des Betriebsbremszylinders (2) beaufschlagbare Steuerkammer (37) und einen bewegbaren Ventilkörper (39, 42, 44) auf;
g) das erste Ventil (50, 40, 34, 14, 15) ist so ausgebildet, dass bei Beaufschlagung seiner Steuerkammer (37) mit dem in die Druckmittelkammer (22) des Betriebsbremszylinders (2) eingesteuerten Druck der Ventilkörper (39, 42, 44) vom Druck gegen die Rückstellkraft in Schließrichtung des ersten Ventils (50, 40, 34, 14, 15) antreibbar ist;
h) es ist ein zweites Ventil (5, 14, 13, 52) vorgesehen, mittels welchem die Arbeitskammer (49) des ersten Ventils (50, 40, 34, 14, 15) gegen die Druckmittelkammer (22) des Betriebsbremszylinders (2) absperrbar ist;
i) das zweite Ventil (5, 14, 13, 52) ist so ausgebildet und so angeordnet, dass es sich bei druckbeaufschlagter Druckmittelkammer (4) des Federspeicherbremszylinders (1) in seiner Schließstellung befindet und bei Druckentlastung der Druckmittelkammer (4) des Federspeicherbremszylinders (1) und der **dadurch** bewirkten Bewegung des Kolbens (7) des Federspeicherbremszylinders (1) in Richtung auf die Druckmittelkammer (4) zu in seine Offenstellung gebracht wird;
j) das erste Ventil (50, 40, 34, 14, 15) und das zweite Ventil (5, 14, 13, 52) sind so ausgebildet und so angeordnet, dass bei druckbeaufschlagter Druckmittelkammer (22) des Betriebsbremszylinders (2) und Druckentlastung der Druckmittelkammer (4) des Federspeicherbremszylinders (1) das zweite Ventil (5, 14, 13, 52) erst dann von seiner Schließstellung in seine Offenstellung gelangt, wenn das erste Ventil (50, 40, 34, 14, 15) **durch** Beaufschlagung seiner Steuerkammer (37) mit dem Druck der Druckmittelkammer (22) des Betriebsbremszylinders (2) in seine Schließstellung gelangt ist.

2. Beatmungseinrichtung nach Anspruch 1, **gekennzeichnet durch** die folgenden Merkmale:
a) es ist eine zusätzliche Kammer (48) vorgesehen;
b) der Ventilkörper (39, 42, 44) des ersten Ventils (50, 40, 34, 14, 15) weist eine erste Wirkfläche (38) und eine der ersten Wirkfläche (38) entgegengerichtete zweite Wirkfläche (45) auf, wobei der Ventilkörper (39, 42, 44) mit seiner ersten Wirkfläche (38) die Steuerkammer (37) und mit seiner zweiten Wirkfläche (45) die zusätzliche Kammer (48) begrenzt;
c) die zusätzliche Kammer (48) ist mittels des Ventilkörpers (39, 42, 44) wenigstens annähernd druckdicht abgeschlossen.

3. Beatmungseinrichtung nach wenigstens einem der vorhergehenden Ansprüche 1 oder 2, **gekennzeichnet durch** die folgenden Merkmale:
a) es ist ein drittes Ventil (5, 15, 13, 52) vorgesehen, mittels welchem die Druckmittelkammer (22) des Betriebsbremszylinders (2) gegen die Steuerkammer (37) des ersten Ventils (50, 40, 34, 14, 15) absperrbar ist;
b) das dritte Ventil (5, 15, 13, 52) befindet sich bei druckbeaufschlagter Druckmittelkammer (4) des Federspeicherbremszylinders (1) in seiner schließstellung und wird bei Druckentlastung der Druckmittelkammer (4) des Federspeicherbremszylinders (1) und **dadurch** bewirkter Bewegung des Kolbens (7) des Federspeicherbremszylinders (1) in Richtung auf die Druckmittelkammer (4) zu in seine Offenstellung gebracht;
c) das zweite Ventil (5, 14, 13, 52) und das dritte Ventil (5, 15, 13, 52) sind so ausgebildet und so angeordnet, daß das zweite Ventil (5, 14, 13, 52) bei einer Bewegung des Kolbens (7) des Federspeicherbremszylinders (1) in Richtung auf die Druckmittelkammer (4) des Federspeicherbremszylinders (1) zu erst dann in seine Offenstellung gebracht wird, wenn sich das dritte Ventil (5, 15, 13, 52) bereits in seiner Offenstellung befindet und bei einem Hub des Kolbens (7) des Federspeicherbremszylinders (1) in Bremslöserichtung in seine Schließstellung gebracht wird, bevor das dritte Ventil (5, 15, 13, 52) in seine Schließstellung gebracht wird.

4. Beatmungseinrichtung nach wenigstens einem der vorhergehenden Ansprüche, **gekennzeichnet durch** die folgenden Merkmale:
a) das als Beatmungsventil dienende Ventil (50, 40, 34, 14, 15) ist als Sitzventil ausgebildet, welches einen Ventilsitz (50) und einem diesem gegenüber am Ventilkörper (39, 42, 44) angeordneten Dichtkörper (40) aufweist;
b) am Ventilkörper (39, 42, 44) sind einander entgegengerichtet eine dritte Wirkfläche (41) und eine vierte Wirkfläche (43) angeordnet, welche die Arbeitskammer (49) des Ventils (50, 40, 34, 14, 15) begrenzen, wobei die dritte Wirkfläche (41) der ersten Wirkfläche (38) und die vierte Wirkfläche (43) der zweiten Wirkfläche (45) des Ventilkörpers (39, 42, 44) entgegengerichtet ist.

5. Beatmungseinrichtung nach wenigstens einem der vorhergehenden Ansprüche, **gekennzeichnet durch** die folgenden Merkmale:
a) das als Beatmungsventil dienende Ventil ist als Schieberventil ausgebildet, welches einen ersten Arbeitsanschluss, einen zweiten Arbeitsanschluss, einen wenigstens an dem einen Arbeitsanschluss vorbeiführbaren Ventilkörper und einen Steueranschluss aufweist;
b) die Arbeitskammer des Ventils wird von einer dritten Wirkfläche und einer dieser gegenüber angeordneten vierten Wirkfläche des Ventilkörpers begrenzt;
c) die dritte Wirkfläche und die dieser entgegengerichtete vierte Wirkfläche sind gleich groß ausgebildet.

6. Beatmungseinrichtung nach wenigstens einem der vorhergehenden Ansprüche, **dadurch gekennzeichnet, daß** das zweite Ventil (5, 14, 13, 52) von dem die Kolbenstange (5) des Federspeicherbremszylinders (1) ringförmig umschließenden Dichtelement (13, 52) und dem einen Arbeitsanschluss (14) des ersten Ventils (50, 40, 34, 14, 15) gebildet wird.

7. Beatmungseinrichtung nach wenigstens einem der vorhergehenden Ansprüche, **dadurch gekennzeichnet, daß** das dritte Ventil (5, 15, 13, 52) von dem die Kolbenstange (5) des Federspeicherbremszylinders (1) ringförmig umschließenden Dichtelement (13, 52) und dem Steueranschluss (15) des ersten Ventils (50, 40, 34, 14, 15) gebildet wird.

8. Beatmungseinrichtung nach wenigstens einem der vorhergehenden Ansprüche, **dadurch gekennzeichnet, daß** der Steueranschluss (15) und der eine Arbeitsanschluss (14) so angeordnet sind, daß, von der Druckmittelkammer (22) des Betriebsbremszylinders (2) aus gesehen, der Steueranschluss (15) vor dem Arbeitsanschluss (14) gelegen ist.

9. Beatmungseinrichtung nach wenigstens einem der vorhergehenden Ansprüche, **dadurch gekennzeichnet, daß** das die Kolbenstange (5) des Federspeicherbremszylinders (1) ringförmig umschließende Dichtelement (13, 52) an seinem der Druckmittelkammer (22) des Betriebsbremszylinders (2) zugewandten Ende eine die Kolbenstange (5) ringförmig umschließende Dichtlippe aufweist, welche als Steuerkante (52) für wenigstens das zweite Ventil (5, 14, 13, 52) dient.

10. Beatmungseinrichtung nach wenigstens einem der vorhergehenden Ansprüche, **dadurch gekennzeichnet, daß** in der zusätzlichen Kammer (48) des ersten Ventils (50, 40, 34, 14, 15) eine Feder (47) angeordnet ist, welche den Ventilkörper (39, 42, 44) in Öffnungsrichtung des ersten Ventils (50, 40, 34, 14, 15) beaufschlagt.

11. Beatmungseinrichtung nach Anspruch 1, **gekennzeichnet durch** die folgenden Merkmale:
a) der Kolben (23, 24) und die Kolbenstange (29) weisen eine abgestufte Bohrung (59, 58, 57) auf, die auf der der Druckmittelkammer (22) zugewandten Seite des Kolbens (23, 24) beginnt und sich, in Richtung der Längsachse der Kolbenstange (29) verlaufend, in die Kolbenstange (29) hineinerstreckt;
b) das als Beatmungsventil dienende Ventil (50, 40, 34, 14, 15) ist der Abstufung der Bohrung (59, 58, 57) entsprechend abgestuft ausgebildet;
c) das Ventil (50, 40, 34, 14, 15) ist so in der Bohrung (59, 58, 57) angeordnet, daß ein erster Arbeitsanschluss (34) des Ventils (50, 40, 34, 14, 15) über eine Querbohrung (61) in der Kolbenstange (29) mit der Federkammer (25) und.ein zweiter Arbeitsanschluss (14) des Ventils (50, 40, 34, 14, 15) sowie ein Steueranschluss (15) des Ventils (50, 40, 34, 14, 15) über den den größeren Durchmesser aufweisenden Teil (58, 59) der Bohrung (59, 58, 57) mit der Druckmittelkammer (22) verbunden ist.

12. Beatmungseinrichtung nach wenigstens einem der vorhergehenden Ansprüche, **gekennzeichnet durch** die folgenden Merkmale:
a) das als Beatmungsventil ausgebildete Ventil (50, 40, 34, 14, 15, 55) ist in der Art einer Ventilpatrone ausgebildet, welche ein Gehäuse (54) mit dem ersten Arbeitsanschluss (34), dem zweiten Arbeitsanschluss (14), dem Steueranschluss (15), der Arbeitskammer (49), der Steuerkammer (37) und der zusätzlichen Kammer (48) aufweist;
b) in dem Gehäuse (54) sind der Ventilsitz (50) und der in Richtung der Längsachse des Gehäuses (54) bewegbare, den Dichtkörper (40) tragende Ventilkörper (39, 42, 44) angeordnet.

## Claims

1. Breather device for a brake cylinder constituted by a spring brake cylinder (1), which brake cylinder is structurally combined with a further brake cylinder which is in the form of a service brake cylinder (2), the device having the following features:
a) the spring brake cylinder (1) has a piston (7) movable by a spring (12), which piston divides the spring brake cylinder (1) into a pressure medium chamber (4) and a spring chamber (9) accommodating the spring (12);
b) the service brake cylinder (2) has a piston (23, 24) movable by pressure medium against the force of a spring (26), which piston divides the service brake cylinder (2) into a pressure medium chamber (22) and a spring chamber (25) accommodating the spring (26);
c) there is arranged on the piston (7) of the spring brake cylinder (1) a piston rod (5) which extends, through a through-hole (32) in a wall (30) which separates the pressure medium chamber (4) of the spring brake cylinder (1) from the pressure medium (22) of the service brake cylinder (2), in the direction of the pressure medium chamber (22) of the service brake cylinder (2), the piston rod (5) being guided sealingly in the through-hole (32) by means of a sealing element (13, 52) which surrounds like a ring the piston rod (5);
d) the breather device has a first valve (50, 40, 34, 14) arranged in or on the piston rod (5) of the piston (7) of the spring brake cylinder (1), by means of which first valve breathing of the spring chamber (9) of the spring brake cylinder (1) from the pressure medium chamber (22) of the service brake cylinder (2) can be brought about when pressure in the pressure medium chamber (4) of the spring brake cylinder (1) is released;
e) the first valve (50, 40, 34, 14) is so formed that, when pressure medium is let into the pressure medium chamber (22) of the service brake cylinder (2), it is movable from its basic open position into its closed position against a restoring force;
**characterized by** the following features:
f) the first valve (50, 40, 34, 14, 15) has a working chamber (49), a control chamber (37) which is arranged to be acted upon by the pressure of the pressure medium chamber (22) of the service brake cylinder (2), and a movable valve body (39, 42, 44);
g) the first valve (50, 40, 34, 14, 15) is so formed that, when its control chamber (37) is acted upon by the pressure let into the pressure medium chamber (22) of the service brake cylinder (2), the valve body (39, 42, 44) is movable in the closing direction of the first valve (50, 40, 34, 14, 15) against the restoring force by means of the pressure;
h) a second valve (5, 14, 13, 52) is provided by means of which the working chamber (49) of the first valve (50, 40, 34, 14, 15) can be shut off from the pressure medium chamber (22) of the service brake cylinder (2);
i) the second valve (5, 14, 13, 52) is so formed and so arranged that, when the pressure medium chamber (4) of the spring brake cylinder (1) is acted upon by pressure, it is positioned in its closed position and, when pressure in the pressure medium chamber (4) of the spring brake cylinder (1) is released and movement of the piston (7) of the spring brake cylinder (1) in the direction of the pressure medium chamber (4) is brought about thereby, it is brought into its open position;
j) the first valve (50, 40, 34, 14, 15) and the second valve (5, 14, 13, 52) are so formed and so arranged that, when the pressure medium chamber (22) of the service brake cylinder (2) is acted upon by pressure and pressure in the pressure medium chamber (4) of the spring brake cylinder (1) is released, the second valve (5, 14, 13, 52) moves from its closed position into its open position only when the first valve (50, 40, 34, 14, 15) has moved into its closed position as a result of the action on its control chamber (37) of the pressure of the pressure medium chamber (22) of the service brake cylinder (2).

2. Breather device according to claim 1, **characterized by** the following features:
a) an additional chamber (48) is provided;
b) the valve body (39, 42, 44) of the first valve (50, 40, 34, 14, 15) has a first effective area (38) and a second effective area (45) facing the first effective area (38), the first effective area (38) of the valve body (39, 42, 44) delimiting the control chamber (37) and the second effective area (45) delimiting the additional chamber (48);
c) the additional chamber (48) is closed off in at least an approximately pressure-sealed manner by means of the valve body (39, 42, 44).

3. Breather device according to at least one of the preceding claims 1 or 2, **characterized by** the following features:
a) a third valve (5, 15, 13, 52) is provided by means of which the pressure medium chamber (22) of the service brake cylinder (2) can be shut off from the control chamber (37) of the first valve (50, 40, 34, 14, 15);
b) the third valve (5, 15, 13, 52) is located in its closed position when the pressure medium chamber (4) of the spring brake cylinder (1) is acted upon by pressure, and is brought into its open position when pressure in the pressure medium chamber (4) of the spring brake cylinder (1) is released and movement of the piston (7) of the spring brake cylinder (1) in the direction of the pressure medium chamber (4) is brought about thereby;
c) the second valve (5, 14, 13, 52) and the third valve (5, 15, 13, 52) are so formed and so arranged that, when the piston (7) of the spring brake cylinder (1) moves in the direction of the pressure medium chamber (4) of the spring brake cylinder (1), the second valve (5, 14, 13, 52) is brought into its open position only when the third valve (5, 15, 13, 52) is already located in its open position and is brought by a stroke of the piston (7) of the spring brake cylinder (1) in the brake release direction into its closed position, before the third valve (5, 15, 13, 52) is brought into its closed position.

4. Breather device according to at least one of the preceding claims, **characterized by** the following features:
a) the valve (50, 40, 34, 14, 15) acting as the breather valve is formed as a seat valve, which has a valve seat (50) and a sealing element (40) arranged opposite thereto on the valve body (39, 42, 44);
b) arranged on the valve body (39, 42, 44) facing one another are a third effective area (41) and a fourth effective area (43) which delimit the working chamber (49) of the valve (50, 40, 34, 14, 15), the third effective area (41) facing the first effective area (38) and the fourth effective area (43) facing the second effective area (45) of the valve body (39, 42, 44).

5. Breather device according to at least one of the preceding claims, **characterized by** the following features:
a) the valve acting as breather valve is formed as a slide valve, which has a first operative port, a second operative port, a valve body that can be moved past at least one operative port, and a control port;
b) the working chamber of the valve is delimited by a third effective area and by a fourth effective area, arranged opposite thereto, of the valve body;
c) the third effective area and the fourth effective area facing it are identical in size.

6. Breather device according to at least one of the preceding claims, **characterized in that** the second valve (5, 14, 13, 52) is formed by the sealing element (13, 52) surrounding like a ring the piston rod (5) of the spring brake cylinder (1) and by the one operative port (14) of the first valve (50, 40, 34, 14, 15).

7. Breather device according to at least one of the preceding claims, **characterized in that** the third valve (5, 15, 13, 52) is formed by the sealing element (13, 52) surrounding like a ring the piston rod (5) of the spring brake cylinder (1) and by the control port (15) of the first valve (50, 40, 34, 14, 15).

8. Breather device according to at least one of the preceding claims, **characterized in that** the control port (15) and the one operative port (14) are so arranged that, viewed from the pressure medium chamber (22) of the service brake cylinder (2), the control port (15) is positioned in front of the operative port (14).

9. Breather device according to at least one of the preceding claims, **characterized in that** the sealing element (13, 52) surrounding like a ring the piston rod (5) of the spring brake cylinder (1) comprises, at its end facing the pressure medium chamber (22) of the service brake cylinder (2), a sealing lip surrounding like a ring the piston rod (5), which lip acts as a control edge (52) for at least the second valve (5, 14, 13, 52).

10. Breather device according to at least one of the preceding claims, **characterized in that** there is arranged in the additional chamber (48) of the first valve (50, 40, 34, 14, 15) a spring (47) which acts on the valve body (39, 42, 44) in the opening direction of the first valve (50, 40, 34, 14, 15).

11. Breather device according to claim 1, **characterized by** the following features:
a) the piston (23, 24) and the piston rod (29) have a stepped bore (59, 58, 57), which begins at the side of the piston (23, 24) facing the pressure medium chamber (22) and which extends, in the direction of the longitudinal axis of the piston rod (29), into the piston rod (29);
b) the valve (50, 40, 34, 14, 15) acting as breather valve is stepped to correspond to the stepping of the bore (59, 58, 57);
c) the valve (50, 40, 34, 14, 15) is so arranged in the bore (59, 58, 57) that a first operative port (34) of the valve (50, 40, 34, 14, 15) is connected to the spring chamber (25) by way of a transverse bore (61) in the piston rod (29) and a second operative port (14) of the valve (50, 40, 34, 14, 15), and a control port (15) of the valve (50, 40, 34, 14, 15) is connected to the pressure medium chamber (22) by way of the larger diameter portion (58, 59) of the bore (59, 58, 57).

12. Breather device according to at least one of the preceding claims, **characterized by** the following features:
a) the valve (50, 40, 34, 14, 15, 55) formed as the breather valve is formed like a valve cartridge which has a housing (54) including the first operative port (34), the second operative port (14), the control port (15), the working chamber (49), the control chamber (37) and the additional chamber (48);
b) arranged in the housing (54) are the valve seat (50) and the valve body (39, 42, 44), which is movable in the direction of the longitudinal axis of the housing (54) and carries the sealing element (40).

## Revendications

1. Dispositif de ventilation pour un cylindre de frein réalisé sous la forme d'un cylindre de frein à accumulation par ressort (1), qui est réuni ou combiné sur le plan de la construction à un autre cylindre de frein réalisé en tant que cylindre de frein de service (2), le dispositif présentant les particularités suivantes :
a) le cylindre de frein à accumulation par ressort (1) comporte un piston (7) qui peut être actionné par un ressort (12), et subdivise le cylindre de frein à accumulation par ressort (1) en une chambre de fluide de pression (4) et une chambre de ressort (9) recevant le ressort (12) ;
b) le cylindre de frein de service (2) comporte un piston (23, 24) qui peut être actionné par un fluide de pression à l'encontre de la force d'un ressort (26), et subdivise le cylindre de frein de service (2) en une chambre de fluide de pression (22) et une chambre de ressort (25) recevant le ressort (26) ;
c) sur le piston (7) du cylindre de frein à accumulation par ressort (1) est agencée une tige de piston (5), qui, à travers une ouverture de passage (32) dans une paroi (30) séparant la chambre de fluide de pression (4) du cylindre de frein à accumulation par ressort (1) de la chambre de fluide de pression (22) du cylindre de frein de service (2), s'étend en direction de la chambre de fluide de pression (22) du cylindre de frein de service (2), la tige de piston (5) étant guidée dans l'ouverture de passage (32) de manière étanche au moyen d'un élément d'étanchéité (13, 52) entourant de manière annulaire la tige de piston (5) ;
d) le dispositif de ventilation présente une première soupape (50, 40, 34, 14) qui est agencée dans ou sur la tige de piston (5) du piston (7) du cylindre de frein à accumulation par ressort (1), et par l'intermédiaire de laquelle, en cas de détente dans la chambre de fluide de pression (4) du cylindre de frein à accumulation par ressort (1), peut être produite une ventilation de la chambre de ressort (9) du cylindre de frein à accumulation par ressort (1), en provenance de la chambre de fluide de pression (22) du cylindre de frein de service (2) ;
e) la première soupape (50, 40, 34, 14) est réalisée de façon telle que, lorsque du fluide de pression est envoyé dans la chambre de fluide de pression (22) du cylindre de frein de service (2), elle puisse être amenée, à l'encontre d'une force dé rappel, de sa position de base ouverte, dans sa position fermée ;
**caractérisé par** les particularités suivantes :
f) la première soupape (50, 40, 34, 14, 15) comprend une chambre de travail (49), une chambre de commande (37) pouvant être alimentée avec la pression de la chambre de fluide de pression (22) du cylindre de frein de service (2), et un corps d'obturation de soupape (39, 42, 44) mobile ;
g) la première soupape (50, 40, 34, 14, 15) est réalisée de façon telle, qu'en cas d'alimentation de sa chambre de commande (37) avec la pression envoyée dans la chambre de fluide de pression (22) du cylindre de frein de service (2), le corps d'obturation de soupape (39) puisse être entraîné par la pression à l'encontre de la force de rappel dans la direction de fermeture de la première soupape (50, 40, 34, 14, 15) ;
h) il est prévu une deuxième soupape (5, 14, 13, 52) au moyen de laquelle il est possible d'isoler la chambre de travail (49) de la première soupape (50, 40, 34, 14, 15) à l'encontre de la chambre de fluide de pression (22) du cylindre de frein de service (2) ;
i) la deuxième soupape (5, 14, 13, 52) est réalisée de façon à se trouver dans sa position fermée lorsque la chambre de fluide de pression (4) du cylindre de frein à accumulation par ressort (1) est alimentée en pression, et de façon à être amenée dans sa position ouverte en cas d'une détente dans la chambre de fluide de pression (4) du cylindre de frein à accumulation par ressort (1), et du mouvement ainsi produit du piston (7) du cylindre de frein à accumulation par ressort (1) en direction de la chambre de fluide de pression (4) ;
j) la première soupape (50, 40, 34, 14, 15) et la deuxième soupape (5, 14, 13, 52) sont réalisées et agencées de façon telle, que dans le cas d'une alimentation en pression de la chambre de fluide de pression (22) du cylindre de frein de service (2) et d'une détente dans la chambre de fluide de pression (4) du cylindre de frein à accumulation par ressort (1), la deuxième soupape (5, 14, 13, 52) ne parvienne de sa position ouverte dans la position fermée, que lorsque la première soupape (50, 40, 34, 14, 15), par alimentation de sa chambre de commande (37) avec la pression de la chambre de fluide de pression (22) du cylindre de frein de service (2), est parvenue dans sa position fermée.

2. Dispositif de ventilation selon la revendication 1, **caractérisé par** les particularités suivantes :
a) il est prévu une chambre (48) supplémentaire ;
b) le corps d'obturation de soupape (39, 42, 44) de la première soupape (50, 40, 34, 14, 15) présente une première surface active (38) et une deuxième surface active (45) orientée de manière opposée à la première surface active (38), le corps d'obturation de soupape (39, 42, 44) délimitant avec sa première surface active (38), la chambre de commande (37), et avec sa deuxième surface active (45), la chambre supplémentaire (48) ;
c) la chambre supplémentaire (48) est fermée au moins de manière approximativement étanche à la pression, au moyen du corps d'obturation de soupape (39, 42, 44).

3. Dispositif de ventilation selon l'une au moins des revendications précédentes 1 ou 2, **caractérisé par** les particularités suivantes :
a) il est prévu une troisième soupape (5, 15, 13, 52) au moyen de laquelle la chambre de fluide de pression (22) du cylindre de frein de service (2) peut être isolée à l'encontre de la chambre de commande (37) de la première soupape (50, 40, 34, 14, 15) ;
b) la troisième soupape (5, 15, 13, 52) se trouve dans sa position fermée lorsque la chambre de fluide de pression (4) du cylindre de frein à accumulation par ressort (1) est alimentée en pression, et est amenée dans sa position ouverte dans le cas d'une détente dans la chambre de fluide de pression (4) du cylindre de frein à accumulation par ressort (1) et du mouvement ainsi produit du piston (7) du cylindre de frein à accumulation par ressort (1) en direction de la chambre de fluide de pression (4) ;
c) la deuxième soupape (5, 14, 13, 52) et la troisième soupape (5, 15, 13, 52) sont réalisées et agencées de façon telle, que la deuxième soupape (5, 14, 13, 52), lors d'un mouvement du piston (7) du cylindre de frein à accumulation par ressort (1) en direction de la chambre de fluide de pression (4) du cylindre de frein à accumulation par ressort (1), ne soit amenée dans sa position ouverte que lorsque la troisième soupape (5, 15, 13, 52) se trouve déjà dans sa position ouverte, et soit amenée, lors d'un déplacement du piston (7) du cylindre de frein à accumulation par ressort (1) dans la direction de desserrage du frein, dans sa position fermée avant que la troisième soupape (5, 15, 13, 52) soit amenée dans sa position fermée.

4. Dispositif de ventilation selon l'une au moins des revendications précédentes, **caractérisé par** les particularités suivantes :
a) la soupape (50, 40, 34, 14, 15) servant de soupape de ventilation est réalisée sous forme de soupape à siège, qui comprend un siège de soupape (50) et, agencé en regard de celui-ci, un corps d'étanchéité (40) sur le corps d'obturation de soupape (39, 42, 44) ;
b) sur le corps d'obturation de soupape (39, 42, 44) sont agencées de manière mutuellement opposée, une troisième surface active (41) et une quatrième surface active (43), qui délimitent la chambre de travail (49) de la soupape (50, 40, 34, 14, 15), la troisième surface active (41) étant orientée de manière opposée à la première surface active (38), et la quatrième surface active (43) de manière opposée à la deuxième surface active (45) du corps d'obturation de soupape (39, 42, 44).

5. Dispositif de ventilation selon l'une au moins des revendications précédentes, **caractérisé par** les particularités suivantes :
a) la soupape servant de soupape de ventilation est réalisée sous la forme d'une soupape à coulisse qui présente un premier raccord de travail, un deuxième raccord de travail, un corps d'obturation de soupape pouvant passer au-devant d'au moins un raccord de travail, et un raccord de commande ;
b) la chambre de travail de la soupape est délimitée par une troisième surface active et par une quatrième surface active agencée en regard de la précédente, du corps d'obturation de soupape ;
c) la troisième surface active et la quatrième surface active qui lui est opposée, sont réalisées de même grandeur.

6. Dispositif de ventilation selon l'une au moins des revendications précédentes, **caractérisé en ce que** la deuxième soupape (5, 14, 13, 52) est formée par l'élément d'étanchéité (13, 52) entourant de manière annulaire la tige de piston (5) du cylindre de frein à accumulation par ressort (1), et par ledit un raccord de travail (14) de la première soupape (50, 40, 34, 14, 15).

7. Dispositif de ventilation selon l'une au moins des revendications précédentes, **caractérisé en ce que** la troisième soupape (5, 15, 13, 52) est formée par l'élément d'étanchéité (13, 52) entourant de manière annulaire la tige de piston (5) du cylindre de frein à accumulation par ressort (1), et par le raccord de commande (15) de la première soupape (50, 40, 34, 14, 15).

8. Dispositif de ventilation selon l'une au moins des revendications précédentes, **caractérisé en ce que** le raccord de commande (15) et ledit un raccord de travail (14) sont agencés de façon à ce que, vu à partir de la chambre de fluide de pression (22) du cylindre de frein de service (2), le raccord de commande (15) soit placé avant le raccord de travail (14).

9. Dispositif de ventilation selon l'une au moins des revendications précédentes, **caractérisé en ce que** l'élément d'étanchéité (13, 52) entourant de manière annulaire la tige de piston (5) du cylindre de frein à accumulation par ressort (1), présente à son extrémité dirigée vers la chambre de fluide de pression (22) du cylindre de frein de service (2), une lèvre d'étanchéité qui entoure de manière annulaire la tige de piston (5) et qui sert d' arrête de commande (52) au moins pour la deuxième soupape (5, 14, 13, 52).

10. Dispositif de ventilation selon l'une au moins des revendications précédentes, **caractérisé en ce que** dans la chambre supplémentaire (48) de la première soupape (50, 40, 34, 14, 15) est agencé un ressort (47) qui sollicite le corps d'obturation de soupape (39, 42, 44) dans la direction d'ouverture de la première soupape (50, 40, 34, 14, 15).

11. Dispositif de ventilation selon la revendication 1, **caractérisé par** les particularités suivantes :
a) le piston (23, 24) et la tige de piston (29) présentent un alésage étagé (59, 58, 57) qui débute sur le côté du piston (23, 24), dirigé vers la chambre de fluide de pression (22), et s'étend à l' intérieur de la tige de piston (29) en suivant la direction de l'axe longitudinal de la tige de piston (29) ;
b) la soupape (50, 40, 34, 14, 15) servant de soupape de ventilation est réalisée étagée conformément à l'étagement de l'alésage (59, 58, 57) ;
c) la soupape (50, 40, 34, 14, 15) est agencée dans l'alésage (59, 58, 57) de façon telle, qu'un premier raccord de travail (34) de la soupape (50, 40, 34, 14, 15) soit relié à la chambre de ressort (25) par l'intermédiaire d'un alésage transversal (61) dans la tige de piston (29), et qu'un deuxième raccord de travail (14) de la soupape (50, 40, 34, 14, 15) ainsi qu'un raccord de commande (15) de la soupape (50, 40, 34, 14, 15) soient reliés à la chambre de fluide de pression (22) par l'intermédiaire de la partie (58, 59) de diamètre le plus grand de l'alésage (59, 58, 57).

12. Dispositif de ventilation selon l'une au moins des revendications précédentes, **caractérisé par** les particularités suivantes :
a) la soupape (50, 40, 34, 14, 15, 55) servant de soupape de ventilation est réalisée à la manière d'une cartouche de soupape, qui comprend un carter (54) avec le premier raccord de travail (34), le deuxième raccord de travail (14), le raccord de commande (15), la chambre de travail (49), la chambre de commande (37) et la chambre supplémentaire (48) ;
b) dans le carter (54) sont agencés le siège de soupape (50) et le corps de soupape (39, 42, 44) qui est mobile dans la direction de l'axe longitudinal du carter (54) et porte le corps d'étanchéité (40).
